# EUROPEAN PATENT APPLICATION

(11) **EP 4 198 573 A1**
(43) Date of publication of application: **21.06.2023**
(21) Application number: 22212664.1
(22) Date of filing: 09.12.2022
(51) Int. Cl.: G01S 17/931, B60W 40/06, G01S 13/86, G01S 13/931, G01S 17/86, G01S 17/95

(54) **SYSTEM AND METHOD FOR DETECTING RAINFALL FOR AN AUTONOMOUS VEHICLE**

(30) Priority: 14.12.2021 US 202163265402 P
(71) Applicant: Tusimple, Inc., San Diego, CA 92122 (US)
(72) Inventor: Han, Xiaoling, San Diego, CA92122 (US); Huang, Zehua, San Diego, CA 92122 (US); Zhang, Kun, San Diego, CA 92122 (US)
(74) Representative: Morrall, Jonathan Ian McLachlan

(57) **Abstract**

A system includes an autonomous vehicle and a control device associated with the autonomous vehicle. The control device obtains a plurality of sensor data captured by sensors of the autonomous vehicle. The control device determines a plurality of rainfall levels based on the sensor data. Each rainfall level is captured by a different sensor. the control device determines an aggregated rainfall level in a particular time period by combining the plurality of rainfall levels determined during the particular time period. The control device selects a particular object detection algorithm for detecting objects by at least one sensor. The particular object detection algorithm is configured to filter at least a portion of interference caused by the aggregated rainfall level in the sensor data. The control device causes the particular object detection algorithm to be implemented for the at least one sensor.

## Description

### TECHNICAL FIELD

The present disclosure relates generally to autonomous vehicles. More particularly, the present disclosure is related to a system and method for detecting rainfall for an autonomous vehicle.

### BACKGROUND

One aim of autonomous vehicle technologies is to provide vehicles that can safely navigate towards a destination. Sometimes autonomous vehicles may travel during rain. Generally, rain may affect sensor data captured by sensors of the autonomous vehicles. For example, rain may add noise and interference to the captured sensor data.

### SUMMARY

This disclosure recognizes various problems and previously unmet needs related to implementing safe navigation for an autonomous vehicle in situations where the autonomous vehicle is traveling under rain and the rain causes noise and interference in sensor data captured by sensors of the autonomous vehicle. Certain embodiments of the present disclosure provide unique technical solutions to technical problems of current autonomous vehicle technologies, including those problems described above to counter (e.g., reduce or minimize) rain-induced noise and interference in sensor data while it is raining on a road traveled by an autonomous vehicle.

The present disclosure contemplates systems and methods for determining a rainfall level from sensor data captured by sensors of an autonomous vehicle. For example, the disclosed system may determine a plurality of rainfall levels from rain sensor data, (Light Detection and Ranging) LiDAR sensor data, point clouds, radar data, images, videos, infrared images, infrared videos, and/or any other data captured by various types of sensors.

The disclosed system may determine an aggregated rainfall level by combining the plurality of rainfall levels. For example, the disclosed system may determine the mean of the plurality of rainfall levels.

Various aggregated rainfall levels may cause different amounts of rain-induced noise and interference in the sensor data. Thus, the disclosed system may implement different levels or degrees of rain-induced noise filtering in the object detection process depending on the aggregated rainfall level.

In some embodiments, the disclosed system may select a particular object detection algorithm (with particular rain-induced noise filtering methods) that is pre-mapped with the determined aggregated rainfall level. The disclosed system may cause the particular object detection algorithm to be implemented for detecting objects on and around a road from the sensor data.

In this manner, the disclosed system may reduce (or minimize) the rain-induced noises in the sensor data. Thus, the sensors' perception of the road may be improved. This may lead to a more accurate object detection process. Further, this may improve the overall navigation of the autonomous vehicle during various rain conditions, such as medium rain and heavy rain. Thus, the disclosed system may provide safer driving conditions for the autonomous vehicle, other vehicles, and pedestrians.

For example, the disclosed system may update the driving instructions of the autonomous vehicle according to the determined aggregated rainfall level. For example, if the disclosed system determines a heavy rain condition, the disclosed system may increase the following distance, increase the planned stopping distance, turn on the headlights, activate windshield wipers, and/or reduce the average traveling speed.

In some embodiments, the disclosed system may schedule a sensor cleaning operation according to the determined aggregated rainfall level. For example, for a higher aggregated rainfall level, the disclosed system may cause the housings of sensors of the autonomous vehicle to be cleaned more often, e.g., every second, every five seconds, or any other suitable interval. Thus, the disclosed system may further improve the sensors' perception.

Accordingly, the disclosed system in the present disclosure is integrated into a practical application of improving the autonomous vehicle technology and the navigation of the autonomous vehicle, for example, by detecting the aggregated rainfall level and updating the driving instructions of the autonomous vehicle based on the aggregated rainfall level.

Furthermore, the disclosed system may be integrated into an additional practical application of improving the sensors' perception, for example, by scheduling the sensor cleaning operation to clean the housings of the sensors based on the aggregated rainfall level.

Furthermore, the disclosed system may be integrated into an additional practical application of improving the object detection technology, for example, by detecting rain-induced noise and interference in the sensor data and applying rain-induced noise filtering methods to reduce (or minimize) the rain-induced noise and interference in the sensor data.

As such, the systems described in this disclosure may be integrated into practical applications for determining a more efficient, safe, and reliable navigation solution for autonomous vehicles as well as other vehicles on the same road as the autonomous vehicle.

In one embodiment, a system may comprise an autonomous vehicle and a control device associated with the autonomous vehicle. The autonomous vehicle may be configured to travel along a road. The autonomous vehicle is associated with a plurality of sensors, where each sensor from among the plurality of sensors is configured to capture sensor data. The control device may comprise at least one processor. The processor may obtain a plurality of sensor data captured by the plurality of sensors. The processor may determine a plurality of rainfall levels bases at least in part upon the plurality of sensor data. Each rainfall level from among the plurality of rainfall levels is captured by a different sensor from among the plurality of sensors. In determining the plurality of rainfall levels based at least in part upon the plurality of sensor data, the processor may perform one or more of the following operations for at least one sensor from among the plurality of sensors. The processor may capture a first sensor data when it is raining on the autonomous vehicle. The processor may capture a second sensor data when it is not raining on the autonomous vehicle. The processor may compare the first sensor data with the second sensor data. The processor may determine a difference between the first sensor data and the second sensor data. The processor determine that the difference between the first sensor data and the second sensor data is due to rainfall. The processor may determine a rainfall level associated with the at least one sensor, wherein the rainfall level corresponds to the difference between the first sensor data and the second sensor data. The processor may determine an aggregated rainfall level in a particular time period by combining the plurality of rainfall levels determined during the particular time period.

Certain embodiments of this disclosure may include some, all, or none of these advantages. These advantages and other features will be more clearly understood from the following detailed description taken in conjunction with the accompanying drawings and claims.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
FIG. 1 illustrates an embodiment of a system for determining a rainfall level for an autonomous vehicle;
FIG. 2 illustrates an example operational flow of the system of FIG. 1 for determining a rainfall level for an autonomous vehicle;
FIG. 3 illustrates examples of sensors' calibration curves used by the system of FIG. 1;
FIG. 4 illustrates examples of mapping tables between rainfall levels and object detection algorithms used by the system of FIG. 1;
FIG. 5 illustrates example locations where sensors are located with respect to an autonomous vehicle;
FIG. 6 illustrates an embodiment of a method for determining a rainfall level for an autonomous vehicle;
FIG. 7 illustrates a block diagram of an example autonomous vehicle configured to implement autonomous driving operations;
FIG. 8 illustrates an example system for providing autonomous driving operations used by the autonomous vehicle of FIG. 7; and
FIG. 9 illustrates a block diagram of an in-vehicle control computer included in the autonomous vehicle of FIG. 7.

### DETAILED DESCRIPTION

As described above, previous technologies fail to provide efficient, reliable, and safe navigation solutions for an autonomous vehicle in situations where the autonomous vehicle travels during rain. The present disclosure provides various systems, methods, and devices to determine a level of rainfall for an autonomous vehicle and use such systems to: 1) update driving instructions of the autonomous vehicle; 2) schedule cleaning the autonomous vehicle's sensors; 3) implement a rain-induced noise filtering method in object detection; and 4) communicate the determined rainfall level to an oversight server and/or other autonomous vehicles traveling behind the autonomous vehicle.

### Example system for detecting rainfall for an autonomous vehicle

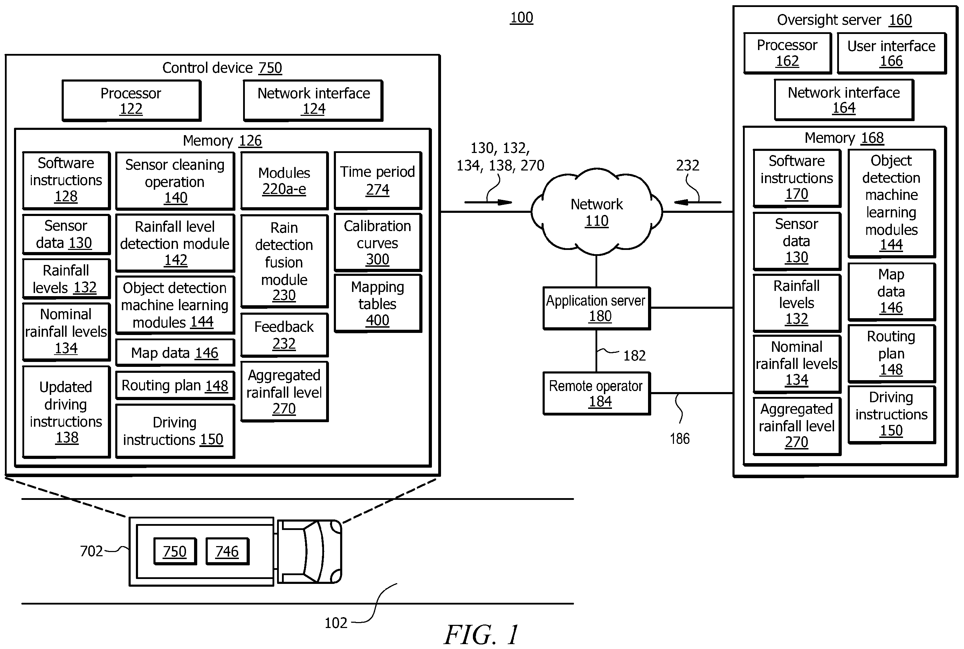

FIG. 1 illustrates an embodiment of a system 100 that may be configured for detecting rainfall for an autonomous vehicle 702. FIG. 1 further illustrates a simplified schematic diagram of a road 102 where the autonomous vehicle 702 may be traveling during rain. In certain embodiments, system 100 may comprise an autonomous vehicle 702 communicatively coupled with an oversight server 160 using a network 110. In certain embodiments, system 100 may further comprise an application server 180 and a remote operator 184. Network 110 enables the communication between components of the system 100. The autonomous vehicle 702 may comprise a control device 750. The control device 750 may comprise a processor 122 in signal communication with a memory 126. Memory 126 may store software instructions 128 that when executed by the processor 122, cause the control device 750 to perform one or more operations described herein. For example, when the software instructions 128 are executed, the control device 750 may determine various rainfall levels 132 each captured by a different sensor 746, a nominal rainfall level 134 for each rainfall level 132, and an aggregated rainfall level 270 on the autonomous vehicle 702 by combining the nominal rainfall levels 134.

Oversight server 160 may comprise a processor 162 in signal communication with a memory 168. Memory 168 may store software instructions 170 that when executed by the processor 162, cause the oversight server 160 to perform one or more operations described herein. For example, when the software instructions 170 are executed, the oversight server 160 may confirm, update, and/or override the aggregated rainfall level 270 determined by the control device 750. In other embodiments, system 100 may not have all of the components listed and/or may have other elements instead of, or in addition to, those listed above. System 100 may be configured as shown or in any other configuration.

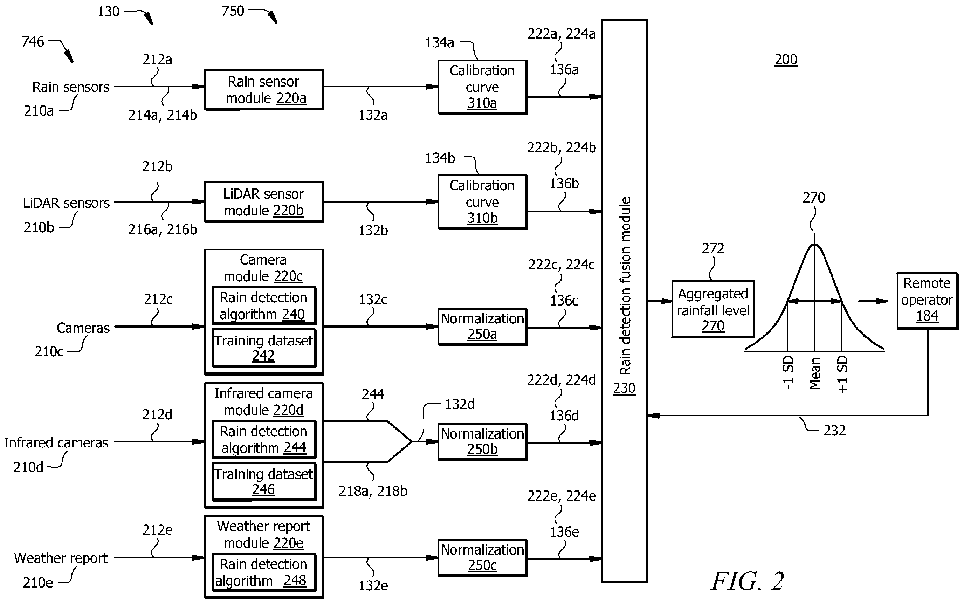

One potential approach to determine a level of rainfall on the autonomous vehicle 702 may include obtaining sensor data from a rain sensor associated with the autonomous vehicle 702 and determining a rainfall level that the rain sensor has detected. However, the determined rainfall level may not be accurate because the rainfall level may be subject to the location of the rain sensor, the direction the rain sensor is facing, the speed of the autonomous vehicle 702, and other factors. Thus, system 100 may be configured to employ various types of sensors 746, implement a different rain sensing and detecting module for each type of sensor 746, and determine an aggregated rainfall level 270 by combining a plurality of rainfall levels 132 determined from the sensors 746. Details of the operation of system 100 to determine an aggregated rainfall level 270 are described in greater detail below in conjunction with an operational flow 200 of system 100 described in FIG. 2.

In general, the system 100 (via the control device 750) may obtain a plurality of sensor data 130 captured by a plurality of sensors 746. The control device 750 may determine a plurality of rainfall levels 132 based on the plurality of sensor data 130. Each rainfall level 132 may be captured by a different sensor 746. In determining the plurality of rainfall levels 132, the control device 750 may perform one or more of the following operations for each sensor 746. The control device 750 may capture a first sensor data 130 when it is raining on the autonomous vehicle 702. The system may capture a second sensor data 130 when it is not raining on the autonomous vehicle 702. The control device 750 may compare the first sensor data 130 with the second sensor data 130. The control device 750 may determine a difference between the first sensor data 130 and the second sensor data 130. The control device 750 may determine that the difference between the first sensor data 130 and the second sensor data 130 is due to rainfall. The control device 750 may determine that a rainfall level 132 associated with a sensor 746, where the determined rainfall level 132 corresponds to the difference between the first sensor data 130 and the second sensor data 130. The control device 750 may determine an aggregated rainfall level 270 in a particular time period 274 by combining the plurality of rainfall levels 132 determined during the particular time period 274. In one embodiment, combining the plurality of rainfall levels 132 may include determining an average of the rainfall levels 132. In one embodiment, the control device 750 may determine a nominal rainfall level 134 from each of rainfall levels 134 before combining the plurality of rainfall levels 132. In one embodiment, the control device 750 may use this information to update driving instructions 150 of the autonomous vehicle 702. In one embodiment, the control device 750 may use this information to schedule sensor cleaning. These operations are described in detail further below.

### System components

### Network

Network 110 may include any interconnecting system capable of transmitting audio, video, signals, data, messages, or any combination of the preceding. Network 110 may include all or a portion of a local area network (LAN), a wide area network (WAN), a metropolitan area network (MAN), a personal area network (PAN), a wireless PAN (WPAN), an overlay network, a software-defined network (SDN), a virtual private network (VPN), a packet data network (e.g., the Internet), a mobile telephone network (e.g., cellular networks, such as 4G or 5G), a plain old telephone (POT) network, a wireless data network (e.g., WiFi, WiGig, WiMax, etc.), a long term evolution (LTE) network, a universal mobile telecommunications system (UMTS) network, a peer-to-peer (P2P) network, a Bluetooth network, a near field communication (NFC) network, a Zigbee network, a Z-wave network, a WiFi network, and/or any other suitable network.

### Example autonomous vehicle

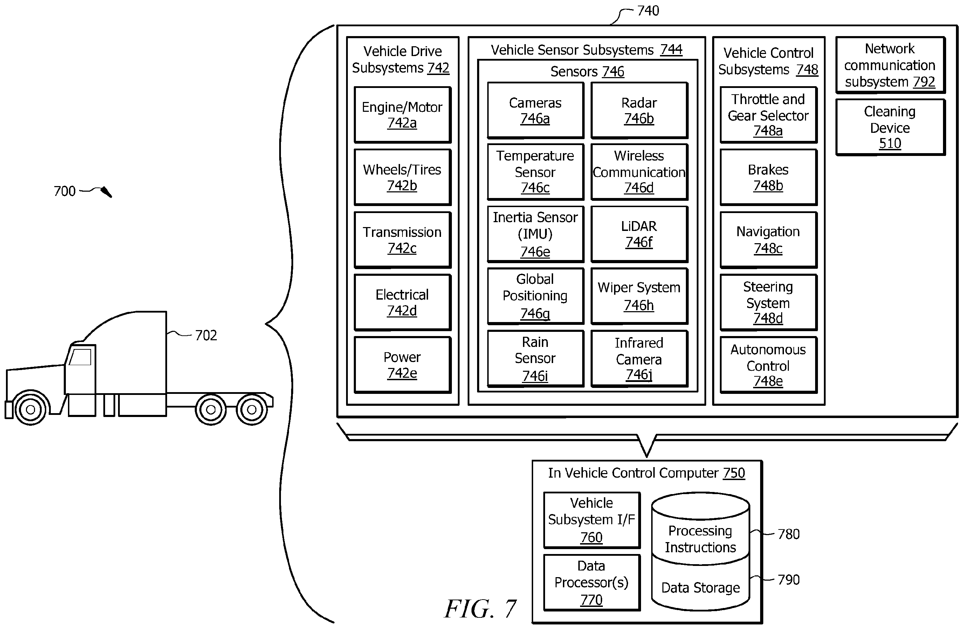

In one embodiment, the autonomous vehicle 702 may include a semi-truck tractor unit attached to a trailer to transport cargo or freight from one location to another location (see FIG. 7). The autonomous vehicle 702 is generally configured to travel along a road 102 in an autonomous mode. The autonomous vehicle 702 may navigate using a plurality of components described in detail in FIGS. 7-9. The operation of the autonomous vehicle 702 is described in greater detail in FIGS. 7-9. The corresponding description below includes brief descriptions of certain components of the autonomous vehicle 702.

Control device 750 may be generally configured to control the operation of the autonomous vehicle 702 and its components and to facilitate autonomous driving of the autonomous vehicle 702. The control device 750 may be further configured to determine a pathway in front of the autonomous vehicle 702 that is safe to travel and free of objects or obstacles, and navigate the autonomous vehicle 702 to travel in that pathway. This process is described in more detail in FIGS. 7-9. The control device 750 may generally include one or more computing devices in signal communication with other components of the autonomous vehicle 702 (see FIG. 7). In this disclosure, the control device 750 may interchangeably be referred to as an in-vehicle control computer 750.

The control device 750 may be configured to detect objects on and around road 102 by analyzing the sensor data 130 and/or map data 146. For example, the control device 750 may detect objects on and around road 102 by implementing object detection machine learning modules 144. The object detection machine learning module 144 may be implemented using neural networks and/or machine learning algorithms for detecting objects from images, videos, infrared images, point clouds, radar data, etc. The object detection machine learning module 144 is described in more detail further below. The control device 750 may receive sensor data 130 from the sensors 746 positioned on the autonomous vehicle 702 to determine a safe pathway to travel. The sensor data 130 may include data captured by the sensors 746.

Sensors 746 may be configured to capture any object within their detection zones or fields of view, such as landmarks, lane markers, lane boundaries, road boundaries, vehicles, pedestrians, road/traffic signs, among others. In some embodiments, the sensors 746 may be configured to detect rain, fog, snow, and/or any other weather condition.

The sensors 746 may include rain sensors, cameras, infrared cameras, (Light Detection and Ranging) LiDAR sensors, motion sensors, infrared sensors, and the like. In some embodiments, the sensors 746 may be positioned around the autonomous vehicle 702 to capture the environment surrounding the autonomous vehicle 702. See the corresponding description of FIG. 7 for further description of the sensors 746.

### Control device

The control device 750 is described in greater detail in FIG. 7. In brief, the control device 750 may include the processor 122 in signal communication with the memory 126 and a network interface 124. The processor 122 may include one or more processing units that perform various functions as described herein. The memory 126 may store any data and/or instructions used by the processor 122 to perform its functions. For example, the memory 126 may store software instructions 128 that when executed by the processor 122 cause the control device 750 to perform one or more functions described herein.

The processor 122 may be one of the data processors 770 described in FIG. 7. The processor 122 comprises one or more processors operably coupled to the memory 126. The processor 122 is any electronic circuitry, including, but not limited to, state machines, one or more central processing unit (CPU) chips, logic units, cores (e.g., a multi-core processor), field-programmable gate arrays (FPGAs), application-specific integrated circuits (ASICs), or digital signal processors (DSPs). The processor 122 may be a programmable logic device, a microcontroller, a microprocessor, or any suitable combination of the preceding. The processor 122 is communicatively coupled to and in signal communication with the network interface 124 and memory 126. The one or more processors may be configured to process data and may be implemented in hardware or software. For example, the processor 122 may be 8-bit, 16-bit, 32-bit, 64-bit, or of any other suitable architecture. The processor 122 may include an arithmetic logic unit (ALU) for performing arithmetic and logic operations, processor registers that supply operands to the ALU and store the results of ALU operations, and a control unit that fetches instructions from memory and executes them by directing the coordinated operations of the ALU, registers and other components. The one or more processors may be configured to implement various instructions. For example, the one or more processors may be configured to execute software instructions 128 to implement the functions disclosed herein, such as some or all of those described with respect to FIGS. 1-9. In some embodiments, the function described herein is implemented using logic units, FPGAs, ASICs, DSPs, or any other suitable hardware or electronic circuitry.

Network interface 124 may be a component of the network communication subsystem 792 described in FIG. 7. The network interface 124 may be configured to enable wired and/or wireless communications. The network interface 124 may be configured to communicate data between the autonomous vehicle 702 and other devices, systems, or domains. For example, the network interface 124 may comprise an NFC interface, a Bluetooth interface, a Zigbee interface, a Z-wave interface, a radio-frequency identification (RFID) interface, a WIFI interface, a LAN interface, a WAN interface, a PAN interface, a modem, a switch, and/or a router. The processor 122 may be configured to send and receive data using the network interface 124. The network interface 124 may be configured to use any suitable type of communication protocol as would be appreciated by one of ordinary skill in the art.

The memory 126 may be one of the data storages 790 described in FIG. 7. The memory 126 may store any of the information described in FIGS. 1-9 along with any other data, instructions, logic, rules, or code operable to implement the function(s) described herein when executed by processor 122. For example, the memory 126 may store software instructions 128, sensor data 130, rainfall levels 132, nominal rainfall levels 134, aggregated rainfall level 270, calibration curves 300, mapping tables 400, updated driving instructions 138, sensor cleaning operation 140, rainfall level detection module 142, rain sensing modules 220a-e, rain detection fusion module 230, object detection machine learning modules 144, driving instructions 150, map data 146, routing plan 148, feedback 232, time period 274, and/or any other data/instructions. The software instructions 128 include code that when executed by the processor 122 causes the control device 750 to perform the functions described herein, such as some or all of those described in FIGS. 1-9. The memory 126 comprises one or more disks, tape drives, or solid-state drives, and may be used as an over-flow data storage device, to store programs when such programs are selected for execution, and to store instructions and data that are read during program execution. The memory 126 may be volatile or non-volatile and may comprise read-only memory (ROM), random-access memory (RAM), ternary content-addressable memory (TCAM), dynamic random-access memory (DRAM), and static random-access memory (SRAM). The memory 126 may include one or more of a local database, cloud database, network-attached storage (NAS), etc.

Sensor data 130 may include data captured by one or more sensors 746. In some examples, the sensor data 130 may include rain sensor data feed, LiDAR sensor data feed, image feed, video feed, infrared image feed, infrared video feed, weather data feed, and/or any other data feeds. The sensor data 130 is described in greater detail below in conjunction with FIG. 2.

Rainfall levels 132 may include levels of rain detected by the sensors 746. Each sensor 746 may detect a different rainfall level 132. Details of the operations of determining the rainfall levels 132, determining nominal rainfall levels 134, and aggregating the rainfall levels 132 to determine the aggregated rainfall level 270 are described in greater detail below in conjunction with the operational flow 200 of system 100 described in FIG. 2.

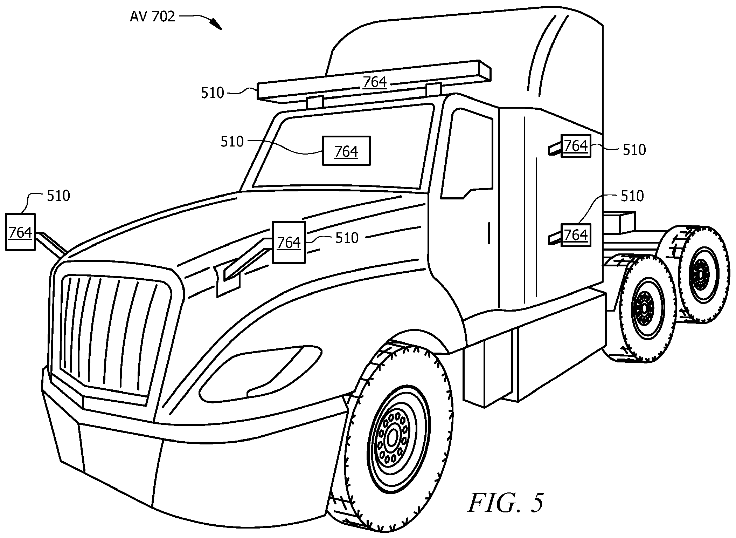

Each calibration curve 300 may be associated with a different sensor 746. A calibration curve 300 associated with a sensor 746 may represent correlations between outputs of the sensor 746 (e.g., rainfall levels 132) and nominal values of the rainfall levels 132 (i.e., nominal rainfall levels 134). The rainfall level 132 detected from a sensor 746 may vary depending on the location where the sensor 746 is located. For example, the sensor 746 may be located on a roof of the autonomous vehicle 702, on a side of the autonomous vehicle 702, inside the autonomous vehicle 702 behind a front window, or any other location with respect to the autonomous vehicle 702. Thus, the rainfall level 132 detected by the sensor may vary based on the field of view of the sensor 746 and how the sensor 746 is exposed to the rain. Example locations of sensors 746 on the autonomous vehicle 702 are illustrated in FIG. 5.

In another example, the rainfall level 132 detected by a sensor 746 may vary depending on the speed of the autonomous vehicle 702. For example, as the autonomous vehicle 702 is traveling along the road 102, the sensor 746 located on and inside the autonomous vehicle 702 may also have the same velocity as the autonomous vehicle 702. Thus, a rainfall level 132 detected by the sensor 746 may be higher as the sensor 746 moves compared to if the sensor 746 is stationary.

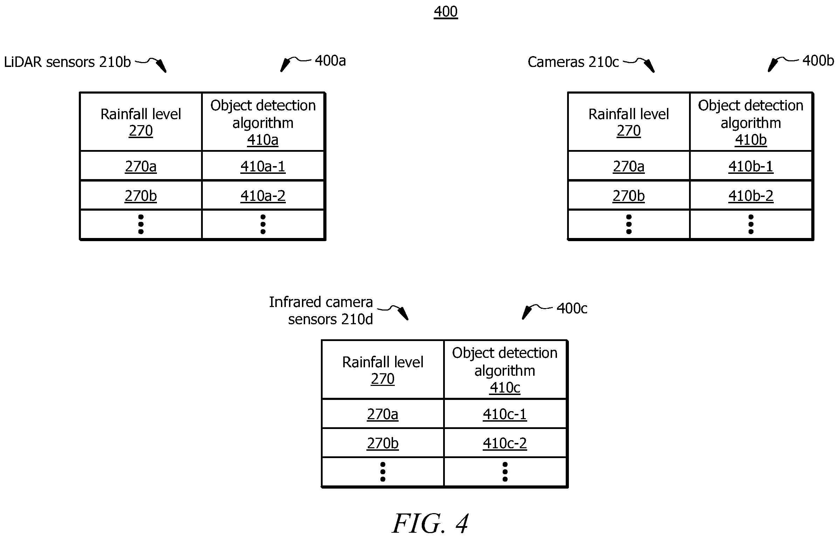

In an example scenario, assume that a rainfall level 132 is detected from a sensor 746 while the autonomous vehicle 702 is traveling along the road 102. To determine a nominal rainfall level 134, the speed of the autonomous vehicle 702 may be used to identify a nominal rainfall level 134 associated with the detected rainfall level 132 in the calibration curve 300 associated with the sensor 746. Example graphs representing calibration curves 300 for different sensors 746 are described in greater detail below in conjunction with FIG. 4.

Each mapping table 400 may be associated with a different sensor 746. A mapping table 400 associated with a sensor 746 may include the mapping between different object detection algorithms 410 to be implemented by the sensor 746 for different aggregated rainfall levels 270.

In an example scenario, with respect to a camera 746a (see FIG. 7), when the aggregated rainfall level 270 is 10% (or within a first range, e.g., 5-10%), a first object detection model 410b-1 (see FIG. 4) may be selected for object detection process by the camera 746a (see FIG. 7) from a mapping table 400b (see FIG. 4) associated with the camera 746a (see FIG. 7). Similarly, when the aggregated rainfall level 270 is 20% (or within a second range, e.g., 11-15%), a second object detection model 410b-2 may be selected for the object detection process by the camera 746a (see FIG. 7) in the mapping table 400b (see FIG. 4) associated with the camera 746a (see FIG. 7). Each object detection algorithm 410 may be similar to an object detection machine learning module 144 described below. However, each object detection algorithm 410 may have a different level of rain-induced noise filtering and be tailored to be used by a different type of sensor 746.

Object detection machine learning modules 144 may be implemented by the processor 122 executing software instructions 128, and may be generally configured to detect objects and obstacles from the sensor data 130. The object detection machine learning modules 144 may be implemented using neural networks and/or machine learning algorithms for detecting objects from any data type, such as images, videos, infrared images, point clouds, Radar data, etc.

In some embodiments, the object detection machine learning modules 144 may be implemented using machine learning algorithms, such as Support Vector Machine (SVM), Naive Bayes, Logistic Regression, k-Nearest Neighbors, Decision Trees, or the like. In some embodiments, the object detection machine learning modules 144 may utilize a plurality of neural network layers, convolutional neural network layers, and/or the like, in which weights and biases of these layers are optimized in the training process of the object detection machine learning modules 144. The object detection machine learning modules 144 may be trained by a training dataset that may include samples of data types labeled with one or more objects in each sample. For example, the training dataset may include sample images of objects (e.g., vehicles, lane markings, pedestrians, road signs, obstacles, etc.) labeled with object(s) in each sample image. Similarly, the training dataset may include samples of other data types, such as videos, infrared images, point clouds, Radar data, etc. labeled with object(s) in each sample data type. The object detection machine learning modules 144 may be trained, tested, and refined by the training dataset and the sensor data 130. The object detection machine learning modules 144 use the sensor data 130 (which are not labeled with objects) to increase their accuracy of predictions in detecting objects. For example, supervised and/or unsupervised machine learning algorithms may be used to validate the predictions of the object detection machine learning modules 144 in detecting objects in the sensor data 130.

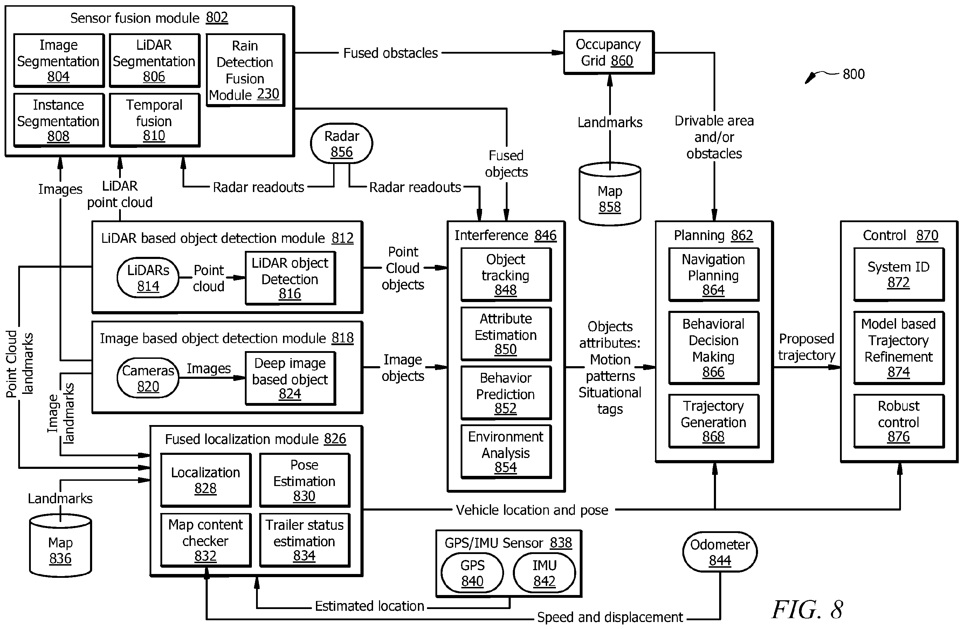

Map data 146 may include a virtual map of a city or an area that includes the road 102. In some examples, the map data 146 may include the map 858 and map database 836 (see FIG. 8 for descriptions of the map 858 and map database 836). The map data 146 may include drivable areas, such as roads 102, paths, highways, and undrivable areas, such as terrain (determined by the occupancy grid module 860, see FIG. 8 for descriptions of the occupancy grid module 860). The map data 146 may specify location coordinates of road signs, lanes, lane markings, lane boundaries, road boundaries, traffic lights, obstacles, etc.

Routing plan 148 is a plan for traveling from a start location (e.g., a first autonomous vehicle launchpad/landing pad) to a destination (e.g., a second autonomous vehicle launchpad/landing pad). For example, the routing plan 148 may specify a combination of one or more streets, roads, and highways in a specific order from the start location to the destination. The routing plan 148 may specify stages, including the first stage (e.g., moving out from a start location/launch pad), a plurality of intermediate stages (e.g., traveling along particular lanes of one or more particular street/road/highway), and the last stage (e.g., entering the destination/landing pad). The routing plan 148 may include other information about the route from the start position to the destination, such as road/traffic signs in that routing plan 148, etc.

Driving instructions 150 may be implemented by the planning module 762 (See descriptions of the planning module 862 in FIG. 8.). The driving instructions 150 may include instructions and rules to adapt the autonomous driving of the autonomous vehicle 702 according to the driving rules of each stage of the routing plan 148. For example, the driving instructions 150 may include instructions to stay within the speed range of a road 102 traveled by the autonomous vehicle 702, adapt the speed of the autonomous vehicle 702 with respect to observed changes by the sensors 546, such as speeds of surrounding vehicles, objects within the detection zones of the sensors 546, etc.

The control device 750 may receive the object detection machine learning modules 144, map data 146, routing plan 148, driving instructions 150, and/or any other data/instructions from an oversight server 160 that may be configured to oversee operations of the autonomous vehicle 702, build the map data 146, determine the routing plan 148, and determine the driving instructions 150, among other operations.

### Oversight server

Oversight server 160 may generally be configured to oversee the operations of the autonomous vehicle 702. The oversight server 160 may comprise a processor 162, a network interface 164, a user interface 166, and a memory 168. The components of the oversight server 160 are operably coupled to each other. The processor 162 may include one or more processing units that perform various functions as described herein. The memory 168 may store any data and/or instructions used by the processor 162 to perform its functions. For example, the memory 168 may store software instructions 170 that when executed by the processor 162 causes the oversight server 160 to perform one or more functions described herein. The oversight server 160 may be configured as shown or in any other suitable configuration.

In one embodiment, the oversight server 160 may be implemented by a cluster of computing devices that may serve to oversee the operations of the autonomous vehicle 702. For example, the oversight server 160 may be implemented by a plurality of computing devices using distributed computing and/or cloud computing systems. In another example, the oversight server 160 may be implemented by a plurality of computing devices in one or more data centers. As such, in one embodiment, the oversight server 160 may include more processing power than the control device 750. The oversight server 160 is in signal communication with the autonomous vehicle 702 and its components (e.g., the control device 750). In one embodiment, the oversight server 160 may be configured to determine a particular routing plan 148 for the autonomous vehicle 702. For example, the oversight server 160 may determine a particular routing plan 148 for an autonomous vehicle 702 that leads to reduced driving time and a safer driving experience for reaching the destination of the autonomous vehicle 702.

In some embodiments, the control device 750 may communicate one or more of the sensor data 130, rainfall levels 132, and aggregated rainfall levels 270 to the oversight server 160.

The oversight server 160 may analyze the received data and confirm, update/or override the driving instructions of the autonomous vehicle 702.

In one embodiment, the routing plan 148 and/or driving instructions for the autonomous vehicle 702 may be determined from Vehicle-to-Cloud (V2C) communications, such as between the autonomous vehicle 702 and the oversight server 160. In one embodiment, the routing plan 148, driving instructions 150, and/or updated driving instructions 138 for the autonomous vehicle 702 may be determined from Vehicle-to-Vehicle (V2V) communications, such as between one autonomous vehicle 702 with another.

In some embodiments, the routing plan 148, driving instructions 150, and/or updated driving instructions 138 for the autonomous vehicle 702 may be implemented by Vehicle-to-Cloud-to-Human (V2C2H), Vehicle-to-Human (V2H), Vehicle-to-Cloud-to-Vehicle (V2C2V), Vehicle-to-Human-to-Vehicle (V2H2V), and/or Cloud-to-Cloud-to-Vehicle (C2C2V) communications, where human intervention is incorporated in determining navigating solutions for the autonomous vehicles 702. In some embodiments, communicating data with the autonomous vehicles 702 may be implemented by any combination of V2V, V2C, V2C2H, V2H, V2C2V, V2H2V, C2C2V communications, among other types of communications.

In an example scenario, assume that while traveling along the road 102, the control device 750 determines the aggregated rainfall levels 270 based on rainfall levels 132 detected by the sensors 746 (described in FIG. 2). The control device 750 may communicate one or more of the sensor data 130, rainfall levels 132, nominal rainfall levels 134, the aggregated rainfall level 270 to the oversight server 160.

As illustrated in FIG. 1, in one example, a remote operator 184 may access the oversight server 160 via a communication path 186. Similarly, the remote operator 184 may access the oversight server 160 indirectly via the application server 180. For example, the remote operator 184 may access the oversight server 160 via communication path 182.

The remote operator 184 may review the sensor data 130, rainfall levels 132, nominal rainfall levels 134, the aggregated rainfall level 270, and/or other data from the user interface 166 and confirm, modify, and/or override the routing plan 148, driving instructions 150, and/or updated driving instructions 138 for the autonomous vehicle 702. The remote operator 184 may add a human perspective in determining the navigation plans of the autonomous vehicles 702 that the control device 750 and/or the oversight server 160 otherwise do not provide. In some instances, the human perspective is preferable compared to machine's perspective in terms of safety, fuel-saving, optimizing the health of the autonomous vehicle 702, optimizing the health of the cargo carried by the autonomous vehicle 702, and optimizing other aspects of the autonomous vehicle 702.

In one embodiment, the oversight server 160 may send the sensor data 130, rainfall levels 132, nominal rainfall levels 134, the aggregated rainfall level 270 and/or any other data/instructions to the application server 180 to be reviewed by the remote operator 184, e.g., wirelessly through network 110 and/or via wired communication. As such, in one embodiment, the remote operator 184 can remotely access the oversight server 160 via the application server 180.

Processor 162 comprises one or more processors. The processor 162 is any electronic circuitry, including state machines, one or more central processing unit (CPU) chips, logic units, cores (e.g., a multi-core processor), field-programmable gate array (FPGAs), application-specific integrated circuits (ASICs), or digital signal processors (DSPs). The processor 162 may be a programmable logic device, a microcontroller, a microprocessor, or any suitable combination of the preceding. The processor 162 may be communicatively coupled to and in signal communication with the network interface 164, user interface 166, and memory 168. The one or more processors are configured to process data and may be implemented in hardware or software. For example, the processor 162 may be 8-bit, 16-bit, 32-bit, 64-bit or of any other suitable architecture. The processor 162 may include an arithmetic logic unit (ALU) for performing arithmetic and logic operations, processor registers that supply operands to the ALU and store the results of ALU operations, and a control unit that fetches instructions from memory and executes them by directing the coordinated operations of the ALU, registers and other components. The one or more processors are configured to implement various instructions. For example, the one or more processors are configured to execute software instructions 170 to implement the functions disclosed herein, such as some or all of those described with respect to FIGS. 1-9. In some embodiments, the function described herein may be implemented using logic units, FPGAs, ASICs, DSPs, or any other suitable hardware or electronic circuitry.

Network interface 164 may be a component of the network communication subsystem 792 described in FIG. 7. The network interface 164 may be configured to enable wired and/or wireless communications. The network interface 164 may be configured to communicate data between the autonomous vehicle 702 and other devices, systems, or domains. For example, the network interface 164 may comprise an NFC interface, a Bluetooth interface, a Zigbee interface, a Z-wave interface, a radio-frequency identification (RFID) interface, a WIFI interface, a LAN interface, a WAN interface, a PAN interface, a modem, a switch, and/or a router. The processor 162 may be configured to send and receive data using the network interface 164. The network interface 164 may be configured to use any suitable type of communication protocol as would be appreciated by one of ordinary skill in the art.

User interfaces 166 may include one or more user interfaces that are configured to interact with users, such as the remote operator 184. The remote operator 184 may access the oversight server 160 via the communication path 186. The user interfaces 166 may include peripherals of the oversight server 160, such as monitors, keyboards, mouse, trackpads, touchpads, microphones, webcams, speakers, and the like. The remote operator 184 may use the user interfaces 166 to access the memory 168 to review the sensor data 130, rainfall levels 132, nominal rainfall levels 134, aggregated rainfall level 270, driving instructions 150, updated driving instructions 138, routing plan 148, and/or other data stored in the memory 168. The remote operator 184 may confirm, update, and/or override the driving instructions 150, updated driving instructions 138, routing plan 148, and/or any other data.

Memory 168 may store any of the information described in FIGS. 1-9 along with any other data, instructions, logic, rules, or code operable to implement the function(s) described herein when executed by processor 162. For example, the memory 168 may store software instructions 170, sensor data 130, rainfall levels 132, nominal rainfall levels 134, aggregated rainfall level 270. Object detection machine learning modules 144, map data 146, routing plan 148, driving instructions 150, and/or any other data/instructions. The software instructions 170 may include code that when executed by the processor 162 causes the oversight server 160 to perform the functions described herein, such as some or all of those described in FIGS. 1-9. The memory 168 comprises one or more disks, tape drives, or solid-state drives, and may be used as an over-flow data storage device, to store programs when such programs are selected for execution, and to store instructions and data that are read during program execution. The memory 168 may be volatile or non-volatile and may comprise read-only memory (ROM), random-access memory (RAM), ternary content-addressable memory (TCAM), dynamic random-access memory (DRAM), and static random-access memory (SRAM). The memory 168 may include one or more of a local database, cloud database, network-attached storage (NAS), etc.

### Application server

The application server 180 may be any computing device configured to communicate with other devices, such as other servers (e.g., oversight server 160), autonomous vehicles 702, databases, etc., via the network 110. The application server 180 may be configured to perform functions described herein and interact with the remote operator 184, e.g., via communication path 182 using its user interfaces. Examples of the application server 180 include, but they are not limited to, desktop computers, laptop computers, servers, etc. In one example, the application server 180 may act as a presentation layer from which the remote operator 184 can access the oversight server 160. As such, the oversight server 160 may send the sensor data 130, rainfall levels 132, nominal rainfall levels 134, aggregated rainfall level 270, driving instructions 150, updated driving instructions 138, routing plan 148, and/or any other data/instructions to the application server 180, e.g., via the network 110. The remote operator 184, after establishing the communication path 182 with the application server 180, may review the received data and confirm, update, and/or override any of the received data, as described further below in conjunction with the operational flow 200 of system 100 described in FIG. 2.

The remote operator 184 may be an individual who is associated with and has access to the oversight server 160. For example, the remote operator 184 may be an administrator that can access and view the information regarding the autonomous vehicle 702, such as sensor data 130, rainfall levels 132, nominal rainfall levels 134, aggregated rainfall level 270, driving instructions 150, updated driving instructions 138, routing plan 148, and other information that is available on the memory 168. In one example, the remote operator 184 may access the oversight server 160 from the application server 180 that is acting as a presentation layer via the network 110.

### Operational flow for detecting rainfall for an autonomous vehicle

FIG. 2 illustrates an example of operational flow 200 of system 100 of FIG. 1 for detecting rainfall for an autonomous vehicle 702. The operational flow 200 may begin when the sensors 746 capture sensor data 130. The sensors 746 may capture sensor data 130 while the autonomous vehicle 702 is operational, i.e., the engine of the autonomous vehicle 702 is turned on. In an example scenario, the sensors 746 may capture sensor data 130 while the autonomous vehicle 702 is traveling along a road.

In the example of FIG. 2, the sensors 746 may include one or more rain sensors 210a, one or more LiDAR sensors 210b, one or more cameras 210c, and one or more infrared cameras 210d. In other examples, the sensors 746 may include any other type of sensor 746. The sensor data 130 may include data captured by any of the sensors 746. The sensor data 130 may include one or more of rain sensor data 212a, LiDAR sensor data 212b, images/videos 212c, infrared images/videos 212d, and/or any other data captured by the sensors 746.

### Obtaining sensor data from rain sensor(s)

Each rain sensor 210a may generally include a liquid sensing module, and is generally configured to sense a liquid level 214 (e.g., moisture level, raindrops) on a housing of the rain sensor 210a. Each rain sensor 210a may be an instance of rain sensors 746i described in FIG. 7. At least a portion of the housing of the rain sensor 210a may be a sensing area of the rain sensor 210a, such that the rain sensor 210a may be able to detect liquid level 214 on the sensing area. Example of the rain sensors 210a may include a capacitive-based sensor, an optical sensor, infrared-based sensor, and/or any other type of sensor that can detect liquid levels 214 on a sensing area. The capacitive-based rain sensor 210a may be configured to detect a liquid level 214 on its sensing area by determining a difference in the capacitance detected from the sensing area before and after moisture (such as raindrops) is added on the sensing area.

The optical-based rain sensor 210a may be configured to detect a liquid level 214 on its sensing area by determining a difference between an incident optical beam and a reflected optical beam before and after moisture (such as raindrops) is added on the sensing area. For example, the optical-based rain sensor may include a transmitter that transmits an incident optical beam, such as an infrared beam, a near-infrared beam, or signals with other frequencies. The incident optical beam may be reflected when it is bounced back from an object. The optical-based rain sensor 210a may include a receiver that is configured to receive the reflected optical beam. If there is liquid or moisture (e.g., raindrop) on the sensing area of the optical-based rain sensor 210a, one or more characteristics of the reflected optical beam may be different compared to when there is no liquid or moisture (e.g., raindrop) on the sensing area of the optical-based rain sensor. For example, if there is liquid or moisture (e.g., raindrop) on the sensing area of the optical-based rain sensor 210a, the phase, frequency, and/or power level of the reflected optical beam may differ compared to when there is no liquid or moisture (e.g., raindrop) on the sensing area of the optical-based rain sensor 210a. The optical-based rain sensor 210a may determine the difference between the incident optical beam and the reflected optical beam, and use this information to determine the liquid level 214 on its sensing area.

When the rain sensor 210a detects a liquid level 214 on its sensing area, the rain sensor 210a may communicate rain sensor data 212a to the control device 750 for processing. For example, the rain sensor data 212a may include signals that may indicate the detected liquid levels 214. The sensor data 130 captured by the rain sensors 210a may include the rain sensor data 212a.

The control device 750 may analyze the rain sensor data 212a by implementing a rain sensor module 220a. The control device 750 may implement the rain sensor module 220a (e.g., by the processor 122 executing the software instructions 128) to determine a rainfall level 132a from the rain sensor data 212a. For example, the rain sensor module 220a may include hardware and/or a software module that is configured to determine a rainfall level 132a. The control device 750 may perform one or more of the following operations for each of the rain sensors 210a, e.g., by implementing the rain sensor module 220a.

For example, assume that it is raining on the autonomous vehicle 702 and the housing of the rain sensor 210a. When the control device 750 receives the rain sensor data 212a from the rain sensor 210a, the control device 750 may determine the liquid level 214a detected by the rain sensor 210a, where the liquid level 214a may represent raindrops on the sensing area of the rain sensor 210a. In some examples, the liquid level 214a may be represented by a number (e.g., 1 out of 10, 2 out of 10, etc.) or a percentage (e.g., 10%, 20%, etc.).

The control device 750 may compare the liquid level 214a with a reference liquid level 214b on the housing of the rain sensor 210a. The reference liquid level 214b may correspond to a liquid level 214 when there is no liquid (e.g., raindrop or moisture) on the housing of the rain sensor 210a and the autonomous vehicle 702. The reference liquid level 214b may be represented by a number (e.g., 0 out of 10) or a percentage (e.g., 0%).

The control device 750 may compare the liquid level 214a (measured when it is raining on the housing of the rain sensor 210a) and the reference liquid level 214b (measured when it is not raining on the housing of the rain sensor 210a).

The control device 750 may determine a difference between the reference liquid level 214b and the liquid level 214a. The control device 750 may determine a rainfall level 132a based on the difference between the reference liquid level 214b and the liquid level 214a such that the rainfall level 132a may be proportional to the difference between the reference liquid level 214b and the liquid level 214a. For example, if the determined liquid level 214a is 25% and the reference liquid level 214b is 0%, the control device 750 may determine that the rainfall level 132a is 25%.

In one embodiment, the control device 750 may determine (and/or update) the rainfall level 132a periodically, such as every minute, every five minutes, or any other suitable duration. The control device 750 may perform a similar operation for each rain sensor 210a. Thus, the control device 750 may determine a plurality of rainfall levels 132a for a plurality of rain sensors 210a.

### Determining a nominal rainfall value for each rain sensor

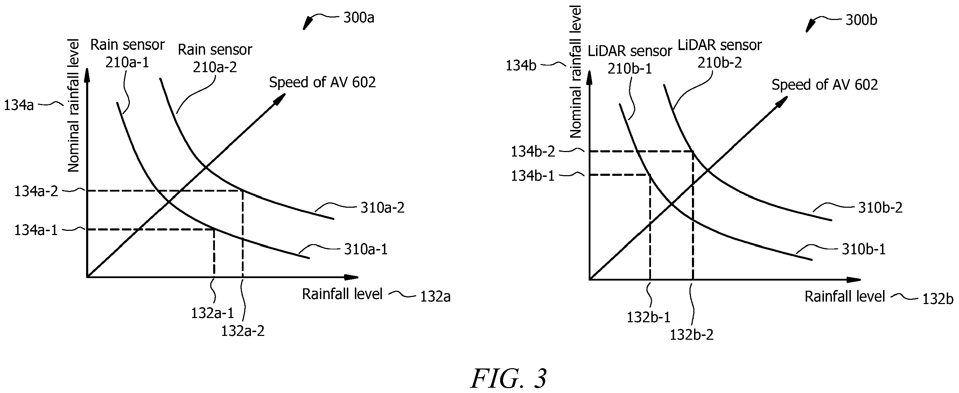

The rainfall level 132a may vary depending on a location of the rain sensor 210a and the speed of the autonomous vehicle 702. For example, for the rain sensor 210a that is located on the roof of the autonomous vehicle 702, on a side of the autonomous vehicle 702, behind the front window of the autonomous vehicle 702, the raindrops that fall on the housing of the rain sensor 210a may be different. In another example, as the autonomous vehicle 702 is traveling along a road, the raindrops that fall on the housing of the rain sensor 210a may be different depending on the speed of the autonomous vehicle 702. Thus, to normalize the rainfall level 132a, the control device 750 may determine a nominal rainfall level 134a for the rain sensor 210a. The control device 750 may determine the nominal rainfall level 134a by using a calibration curve 300a associated with rain sensors 210a illustrated in FIG. 3.

Referring to FIG. 3, upon determining the rainfall level 132a from the rain sensor 210a, the control device 750 may access a table or a graph of calibration curve 300a. The table or the graph of calibration curve 300a may represent mapping and correlations between rainfall values 132a and their corresponding nominal rainfall values 134a. In the table of calibration curve 300a, each rainfall level 132a may be mapped to a corresponding nominal rainfall level 134a. The mapping and correlation between the rainfall levels 132a and their corresponding nominal rainfall levels 134a may be determined based on the speed of the autonomous vehicle 702.

In the example of FIG. 3, for a particular rain sensor 210a, the control device 750 may search in a calibration curve 300a associated with the particular rain sensor 210a to identify a nominal rainfall level 134a that is mapped with the determined rainfall level 132a associated with the particular rain sensor 210a. For example, for a first rain sensor 210a-1, the control device 750 may search in a first calibration curve 310a-1 associated with the first rain sensor 210a-1 to identify a first nominal rainfall level 134a-1 that is mapped with a first rainfall level 132a-1 associated with the first rain sensor 210a-1. Similarly, for a second rain sensor 210a-2, the control device 750 may search in a second calibration curve 310a-2 associated with the second rain sensor 210a-2 to identify a second nominal rainfall level 134a-2 that is mapped with a second rainfall level 132a-1 associated with the second rain sensor 210a-2. The control device 750 may perform a similar operation for other rain sensors 210a. In this manner, the control device 750 may determine a plurality of nominal rainfall levels 134a for the plurality of rain sensors 210a.

Referring back to FIG. 2, the control device 750 may determine an average or mean of the plurality of nominal rainfall levels 134a. The mean of the plurality of nominal rainfall levels 134a may be referred to as the nominal rainfall level 136a. The control device 750 may also determine a sub-confidence score 222a of the nominal rainfall level 136a. The sub-confidence score 222a may represent the accuracy of the nominal rainfall levels 134a and the nominal rainfall level 136a.

In this operation, the control device 750 may determine a distribution and standard deviation of the plurality of nominal rainfall levels 134a. The control device 750 may determine the sub-confidence score 222a based on the determined standard deviation of the nominal rainfall levels 134a, such that the sub-confidence score 222a may be inversely proportional to the standard deviation.

Generally, a wider distribution of nominal rainfall levels 134a may indicate that the different values of the nominal rainfall levels 134a are further apart from the mean of the nominal rainfall levels 134a. Also, a wider distribution of nominal rainfall levels 134a may lead to a larger standard deviation. For example, if the determined standard deviation of the nominal rainfall levels 134a is low (e.g., 15%, etc.), it means that the distribution of nominal rainfall levels 134a is narrow and thus the sub-confidence score 222a may be determined to be high (e.g., 85%, etc.). The control device 750 may feed the nominal rainfall level 136a to the rain detection fusion module 230. The rain detection fusion module 230 may use this information in determining the aggregated rainfall level 270. This operation is described in greater detail further below in conjunction with the description of the rain detection fusion module 230.

### Obtaining sensor data from LiDAR sensor(s)

Each LiDAR sensor 210b may generally include any sensing module that is configured to use lasers to sense objects within its field of detection. Each LiDAR sensor 210b may be an instance of LiDAR sensors 746f described in FIG. 7. The LiDAR sensor 210b may be configured to propagate incident laser beams and receive reflected laser beams bounced back from objects. The LiDAR sensor 210b communicates a signal that includes the incident and reflected laser beams to the control device 750 for processing. The signal may be included in the LiDAR sensor data 212b. The sensor data 130 captured by the LiDAR sensor 210b may include the LiDAR sensor data 212b.

The control device 750 may analyze the LiDAR sensor data 212b by implementing a LiDAR sensor module 220b. The control device 750 may implement the LiDAR sensor module 220b (e.g., by the processor 122 executing the software instructions 128) to determine a rainfall level 132b from the LiDAR sensor data 212b. For example, the LiDAR sensor module 220b may include hardware and/or a software module that is configured to determine a rainfall level 132b. The control device 750 may perform one or more of the following operations for each of the LiDAR sensors 210b, e.g., by implementing the LiDAR sensor module 220b.

For example, assume that it is raining on the autonomous vehicle 702. Also, assume that the LiDAR sensor 210b sends the LiDAR sensor data 212b that includes incident laser beams and reflected laser beams to the control device 750. The control device 750 may determine a laser beam power loss 216a in the reflected laser beam compared to the incident laser beam from the LiDAR sensor data 212b. The laser beam power loss 216a may correspond to a difference between the incident laser beam and the reflected laser beam. The laser beam power loss 216a may be represented by a number (e.g., 6 out of 10, etc.) or a percentage (e.g., 60%, etc.).

In addition or alternatively, the control device 750 may determine a laser beam energy loss in the reflected laser beam compared to the incident laser beam, a phase difference between the incident and reflected laser beams, a frequency difference between the incident and reflected laser beams, and/or other differences. These differences may collectively be referred to as the laser beam power loss 216a.

The control device 750 may compare the laser beam power loss 216a with a reference laser beam power loss 216b. The reference laser beam power loss 216b may be determined when it is not raining on the autonomous vehicle 702 or otherwise there is no moisture in the environment around the LiDAR sensor 210b to detect. The reference laser beam power loss 216b may be represented by a number (e.g., 1 out of 10, etc.) or a percentage (10%, etc.).

The control device 750 may determine an increase in the laser beam power loss 216a compared to the reference laser beam power loss 216b. This is because the rain (or moisture detected by the LiDAR sensor 210b) may affect or otherwise absorb a portion of power of incident and/or reflected laser beams of the LiDAR sensor 210b, cause a phase change, cause a frequency change, and/or other differences. Thus, while raining, the laser beam power loss 216a may be more than the reference laser beam power loss 216b.

The control device 750 may determine a rainfall level 132b for the LiDAR sensor 210b based on the increase in the laser beam power loss 216a such that the rainfall level 132b is proportional to the increase in the laser beam power loss 216a. For example, if the control device 750 determines that the increase in the laser beam power loss 216a compared to the reference laser beam power loss 216b is 20%, the control device 750 may determine that the rainfall level 132b is 20%.

In one embodiment, the control device 750 may determine (and/or update) the rainfall level 132b periodically, such as every minute, every five minutes, or any other suitable duration. The control device 750 may perform a similar operation for each LiDAR sensor 210b. Thus, the control device 750 may determine a plurality of rainfall levels 132b for a plurality of LiDAR sensors 210b.

### Determining a nominal rainfall value for each rain sensor

The rainfall level 134b may vary depending on a location of the LiDAR sensor 210b and the speed of the autonomous vehicle 702, similar to that described above with respect to the rainfall level 134a. For example, depending on where the LiDAR sensor 210b is located with respect to the autonomous vehicle 702 and the traveling speed of the autonomous vehicle 702, raindrops detected by the LiDAR sensor 210b may vary. Thus, to normalize the rainfall level 132b, the control device 750 may determine a nominal rainfall level 134b for the LiDAR sensor 210b. The control device 750 may determine the nominal rainfall level 134b by using a calibration curve 300b associated with the LiDAR sensor 210b illustrated in FIG. 3, similar to that described above with respect to determining the nominal rainfall level 134a.

Referring to FIG. 3, upon determining the rainfall level 132b, the control device 750 may access a table or a graph of calibration curve 300b. The table or graph of calibration curve 300b may represent mapping and correlations between rainfall levels 132b and their corresponding nominal rainfall levels 134b. In the table of calibration curve 300b, each rainfall level 132b may be mapped to a corresponding nominal rainfall level 134b. The mapping and correlation between the rainfall levels 132b and their corresponding nominal rainfall levels 134b may be determined based on the speed of the autonomous vehicle 702. In the example of FIG. 3, for a particular LiDAR sensor 210b, the control device 750 may search a calibration curve 300b associated with the particular LiDAR sensor 210b to identify a nominal rainfall level 134b that is mapped with the determined rainfall level 132b associated with the particular LiDAR sensor 210b.

For example, for a first LiDAR sensor 210b-1, the control device 750 may search a first calibration curve 310b-1 associated with the first LiDAR sensor 210b-1 to identify a first nominal rainfall level 134b-1 that is mapped with a first rainfall level 132b-1 associated with the first LiDAR sensor 210b-1. Similarly, for a second LiDAR sensor 210b-2, the control device 750 may search a second calibration curve 310b-2 associated with the second LiDAR sensor 210b-2 to identify a second nominal rainfall level 134b-2 that is mapped with a second rainfall level 132b-2 associated with the second LiDAR sensor 210b-2. The control device 750 may perform a similar operation for other LiDAR sensors 210b. In this manner, the control device 750 may determine a plurality of nominal rainfall levels 134b for the plurality of LiDAR sensors 210b.

Referring back to FIG. 2, the control device 750 may determine an average or mean of the plurality of nominal rainfall levels 134b. The mean of the plurality of nominal rainfall levels 134b may be referred to as the nominal rainfall level 136b. The control device 750 may also determine a sub-confidence score 222b of the nominal rainfall level 136b. The sub-confidence score 222b may represent the accuracy of the nominal rainfall levels 134b and the nominal rainfall level 136b. In this operation, the control device 750 may determine the distribution and standard deviation of the plurality of nominal rainfall levels 134b. The control device 750 may determine the sub-confidence score 222b based on the determined standard deviation of the nominal rainfall levels 134b, such that the sub-confidence score 222b may be inversely proportional to the standard deviation. For example, the control device 750 may determine the sub-confidence score 222b similar to determining the sub-confidence score 222a described above.

The control device 750 may feed the nominal rainfall level 136b to the rain detection fusion module 230. The rain detection fusion module 230 may use this information in determining the aggregated rainfall level 270. This operation is described in greater detail further below in conjunction with the description of the rain detection fusion module 230.

### Obtaining sensor data from camera(s)

Each camera 210c may generally include any device that is configured to capture images and/or videos of its surrounding environment. Each camera 210c may be an instance of cameras 746a described in FIG. 7. Examples of the cameras 210c may include digital cameras, video cameras, webcams, and/or any other types of cameras. Each camera 210c may communicate captured images and/or videos 212c to the control device 750 for processing. In this disclosure, images and/or videos 212c may collectively be referred to as images 212c. The sensor data 130 captured by each camera 210c may include images and/or videos 212c captured by the cameras 210c.

The control device 750 may analyze the captured images 212c by implementing a camera module 220c. The control device 750 may implement the camera module 220c (e.g., by the processor 122 executing the software instructions 128) to determine a rainfall level 132c from the captured images 212c. The control device 750 may perform one or more of the following operations for each of the cameras 210c, e.g., by implementing the camera module 220c.

The camera module 220c may include a rain detection algorithm 240 that is configured to determine a rainfall level 132c from an image 212c. For example, the rain detection algorithm 240 may include, but it is not limited to, a support vector machine, a neural network, a random forest, a k-means clustering, an image processing, etc. In other examples, the rain detection algorithm 240 may include, but it is not limited to, a multi-layer perceptron, a recurrent neural network (RNN), an RNN long short-term memory (LSTM), a convolution neural network (CNN), a transformer, or any other suitable type of neural network model.

The camera module 220c may further include a training dataset 242 that comprises a set of images labeled with various rainfall levels. The rain detection algorithm 240 may be trained by the training dataset 242 to learn to associate each image in the training dataset 242 with its corresponding rainfall level. For example, during the training process of the rain detection algorithm 240, the rain detection algorithm 240 may be given an image (from the training dataset 242) that is labeled with a particular rainfall level. The particular rainfall level may be represented with a number (e.g., 2 out of 10, 3.4 out of 10) or a percentage (e.g., 20%, 34%, etc.)

The rain detection algorithm 240 may extract features from the image, where the extracted feature may describe the scene in the image, such as edges, shapes, objects, colors, and/or any other aspect of the image. For example, if the image shows a raining scene, the features may also describe the rain, such as the speed of raindrops, shapes of raindrops, sizes of raindrops, rain streaks, rain lines, and other aspects of the rain.

The rain detection algorithm 240 may learn to associate the extracted feature of the image with its corresponding rainfall level. The rain detection algorithm 240 may perform a similar operation for other images of the training dataset 242.

During the testing processor of the rain detection algorithm 240, the rain detection algorithm 240 may be given a testing image (from the training dataset 242) without a label of rainfall level and asked to predict the rainfall level of the testing image. The rain detection algorithm 240 may extract features from the testing image. The rain detection algorithm 240 may compare the extracted features with features of other images from the training dataset 242. The rain detection algorithm 240 may predict the rainfall level of the testing image by identifying particular features of an image in the training dataset 242 that correspond to (or match) the features with the testing image. In one embodiment, the rain detection algorithm 240 may determine that the testing image has the same rainfall level associated with the particular features. In another embodiment, the rain detection algorithm 240 may determine that the testing image has a rainfall level within a threshold range (e.g., within 1%, 2%, or any other suitable range) from the rainfall level associated with the particular features.

In some embodiments, the rain detection algorithm 240 may determine to which class of rainfall (or rainfall range) the testing image belongs. For example, the rain detection algorithm 240 may determine that the testing image belongs to a 10% rainfall level class, a 11% rainfall level class, etc. In another example, the rain detection algorithm 240 may determine that the testing image belongs to a 5-10% rainfall level class, a 14-16% rainfall class, etc., where the rainfall classes may have any suitable range. In this manner, the camera module 220c via the rain detection algorithm 240 may determine rainfall levels 132c by processing the images 212c.

The control device 750 may perform a similar operation for each camera 210c. Thus, the control device 750 may determine a plurality of rainfall levels 132c for a plurality of cameras 210c.

### Determining a nominal rainfall value for each camera

The rainfall level 132c detected from each camera 210c may vary depending on a location of the camera 210c and the speed of the autonomous vehicle 702. For example, a first set of rainfall levels 132c detected from a first set of images 212c captured by a first camera 210c that is located on the roof of the autonomous vehicle 702 may be different compared to a second set of rainfall levels 132c detected from a second set of images 212c captured by a second camera 210c that is located on a side of the autonomous vehicle 702, behind the front window of the autonomous vehicle 702, at the rear of the autonomous vehicle 702, or any other location with respect to the autonomous vehicle 702. This is because a field of view of each camera 210c may depend on its location with respect to the autonomous vehicle 702.

Thus, to unify the rainfall levels 132c, the control device 750 may normalize the rainfall levels 132c in a normalization operation 250a. In this operation, the control device 750 may determine a mean of the rainfall levels 132c. The mean or average of the rainfall levels 132c may correspond to the nominal rainfall level 136c.

The control device 750 may also determine a sub-confidence score 222c of the nominal rainfall level 136c. To this end, the control device 750 may determine the distribution and standard deviation of the rainfall levels 132c. The sub-confidence score 222c may be inversely proportional to the standard deviation. The sub-confidence score 222c may represent the accuracy of the rainfall levels 132c and nominal rainfall levels 136c. For example, the control device 750 may determine the sub-confidence score 222c similar to determining the sub-confidence score 222a described above. The control device 750 may feed the determined nominal rainfall level 136c to the rain detection fusion module 230. The rain detection fusion module 230 may use this information in determining the aggregated rainfall level 270. This operation is described in greater detail further below in conjunction with the description of the rain detection fusion module 230.

### Obtaining sensor data from infrared camera(s)

Each infrared camera 210d may generally include any device that is configured to capture infrared images and/or videos of its surrounding environment. Each infrared camera 210d may be an instance of the infrared cameras 746j described in FIG. 7. Examples of the infrared cameras 210d may include digital cameras, thermal cameras, and the like. An infrared image (or an infrared video) may show temperatures of objects in different colors. For example, a color of an object shown in an infrared image may represent a temperature of the object.

Each infrared camera 210d may communicate captured infrared images and/or videos 212d to the control device 750 for processing. In this disclosure, infrared images and/or infrared videos 212d may collectively be referred to infrared images 212d. The sensor data 130 captured by each infrared camera 210d may include infrared images 212d captured by the infrared camera 210d.

The control device 750 may analyze the captured infrared images 212d by implementing an infrared camera module 220d (e.g., by the processor 122 executing the software instructions 128) to determine a rainfall level 132d from the infrared images and/or videos 212d. The control device 750 may perform one or more of the following operations for each of the infrared cameras 210d, e.g., by implementing the infrared camera module 220d.

In some embodiments, the control device 750 may determine a rainfall level 132d from an infrared image 212d using a rain detection algorithm 244. In some embodiments, the control device 750 may determine a rainfall level 132d from an infrared image 212d by comparing temperatures in infrared images 212d captured before and after rain. These embodiments are described below.

### Determining a rainfall level from infrared images using a machine learning algorithm

The infrared camera module 220d may include a rain detection algorithm 244 that is configured to determine a rainfall level 132d from an infrared image 212d. For example, the rain detection algorithm 244 may include, but it is not limited to, a support vector machine, a neural network, a random forest, a k-means clustering, an image processing, etc. In other examples, the rain detection algorithm 240 may include, but it is not limited to, a multi-layer perceptron, an RNN, an RNN LSTM, a CNN, a transformer, or any other suitable type of neural network model.

The infrared camera module 220d may further include a training dataset 246 that comprises a set of infrared images labeled with various rainfall levels. The rain detection algorithm 244 may be trained by the training dataset 246 to learn to associate each infrared image in the training dataset 246 with its corresponding rainfall level, similar to that described above with respect to the rain detection algorithm 240. The rain detection algorithm 244 may extract features of the infrared image 212d, such as edges, shapes, objects, colors, the speed of raindrops, sizes of raindrops, rain streaks, rain lines, and other features of the infrared image 212d. The rain detection algorithm 244 may predict a rainfall level 132d in the infrared image 212d by comparing the extracted features with features of training images in the training dataset 246 and determining which training images have corresponding (or matching) features compared to the features of the infrared image 212d, similar to that described above with respect to predicting rainfall levels 132c from images 212c.

In this manner, the rain detection algorithm 244 may determine to which rainfall class (or rainfall range class) the infrared image 212d belongs. For example, the rain detection algorithm 244 may determine that the infrared image 212d belongs to 10% rainfall class, 20% rainfall class, etc. In this manner, the infrared camera module 220d via the rain detection algorithm 244 may determine rainfall levels 132d by processing the infrared images 212d. The control device 750 may perform a similar operation for each infrared camera 210d. Thus, the control device 750 may determine a plurality of rainfall levels 132d for a plurality of infrared cameras 210d.

### Determining a rainfall level from infrared images using temperatures

As noted above, colors of objects in an infrared image 212d may represent temperatures 218 of the objects. The infrared camera module 220d may use the temperatures 218 of objects shown in infrared images 212d to determine rainfall levels 132d from the infrared images 212d.

To this end, the infrared camera module 220d may determine a reference temperature 218b of an object shown in the infrared image 212d. The reference temperature 218b may be captured when it is not raining on the autonomous vehicle 702 and/or the housing of the infrared camera 210d. For example, assume that an infrared camera 210d is located such that a portion of the autonomous vehicle 702 can be seen in infrared images 212d captured by the infrared camera 210d. In this example, the infrared camera module 220d may receive a first infrared image 212d from the infrared image 212d when it is not raining on the autonomous vehicle 702 and/or the infrared camera 210d.

The infrared camera module 220d may determine a reference temperature 218b associated with a portion of the autonomous vehicle 702 that is shown in the first infrared image 212d. The reference temperature 218b may be represented by a first color of the portion of the autonomous vehicle 702 in the first infrared image 212d.

The infrared camera module 220d may compare the reference temperature 218b with a temperature 218a of the portion of the autonomous vehicle 702 that is captured from a second infrared image 212d when it is raining on the autonomous vehicle 702 and/or the infrared camera 210d. For example, the infrared camera module 220d may receive a second infrared image 212d from the infrared camera 210d that is captured when it is raining on the autonomous vehicle 702 and/or the infrared camera 210d. The infrared camera module 220d may determine the temperature 218a of the portion of the autonomous vehicle 702 shown in the second infrared image 212d based on the color of the portion of the autonomous vehicle 702 in the second infrared image 212d.

The infrared camera module 220d may compare the temperature 218a of the portion of the autonomous vehicle 702 with the reference temperature 218b of the portion of the autonomous vehicle 702. The infrared camera module 220d may determine a rainfall level 132d in the second infrared image 212d based on a difference between the temperature 218a and the reference temperature 218b of the portion of the autonomous vehicle 702. For example, due to rain, the temperature 218a may be lower than the reference temperature 218b of the portion of the autonomous vehicle 702.

In one embodiment, the infrared camera module 220d may use historical data, including historical rainfall levels 132d, corresponding historical reference temperatures 218b of the portion of the autonomous vehicle 702 (when it was not raining on the autonomous vehicle 702 and/or infrared camera 212d), and corresponding historical temperatures of the portion of the autonomous vehicle 702 (when it was not raining on the autonomous vehicle 702 and/or infrared camera 212d) to determine the correlation between the reference temperature 218b of the portion of the autonomous vehicle 702 and the current temperature 218 of the portion of the autonomous vehicle 702. The infrared camera module 220d may take into account other factors that may affect the temperature 218 of the portion of the autonomous vehicle 702 shown in the infrared image 212d, such as the temperature of the environment, amount of time it has been raining, amount of time the autonomous vehicle 702 has been under the rain, among others.

In one example, if the temperature 218a is 10% lower than the reference temperature 218b of the portion of the autonomous vehicle 702, and the historical data shows that in such a case, a historical rainfall level was a particular value (e.g., 8%, 10%, 12%, 20%, or any other suitable value), the infrared camera module 220d may determine that the rainfall level 132d in the second infrared image 212d is the same as (or within a threshold range of, e.g., ±1%, ±2%, etc.) the historical rainfall level. Although in the example above the temperature and the reference temperature 218b of the portion of the autonomous vehicle 702 is used to determine a rainfall level 132d, it is understood that a temperature and reference temperature 218b of any one or more objects in an infrared image 212d may be used.

In this manner, the infrared camera module 220d may determine rainfall levels 132d from infrared images 212d by implementing the rain detection algorithm 244 and/or using temperatures 218 of objects shown in the infrared images 212d captured before and after rain. The control device 750 may perform a similar operation for each infrared camera 212d. Thus, the control device 750 may determine a plurality of rainfall levels 132d for a plurality of infrared sensors 210d.

### Determining a nominal rainfall value for each infrared camera

The rainfall level 132d detected from each infrared camera 210d may vary depending on a location of the infrared camera 210d and the speed of the autonomous vehicle 702, similar to that described above with respect to cameras 210c. Thus, to unify the rainfall levels 132d, the control device 750 may normalize the rainfall levels 132d in a normalization operation 250b. The normalization operation 250b may be similar to the normalization operation 250a described above. In this operation, the control device 750 may determine the mean of the plurality of rainfall levels 132d. The mean or average of the plurality of rainfall levels 132d may correspond to the nominal rainfall level 136d.

The control device 750 may also determine a sub-confidence score 222d of the nominal rainfall level 136d, similar to that described above with respect to determining the sub-confidence scores 222a and 222c. The sub-confidence score 222d may represent the accuracy of the nominal rainfall level 136d.

The control device 750 may feed the nominal rainfall level 136d to the rain detection fusion module 230. The rain detection fusion module 230 may use this information in determining the aggregated rainfall level 270. This operation is described in greater detail further below in conjunction with the description of the rain detection fusion module 230.

### Determining a rainfall level from a weather report

In one embodiment, the control device 750 may determine a rainfall level 132e from a weather report 210e. The weather report 210e may include live weather news. The control device 750 may access the weather report 210e from the Internet via network 110.

The control device 750 may implement a weather report module 220e (e.g., by the processor 122 executing the software instructions 128) to determine a rainfall level 132e from the weather data 212e. The weather data 212e may include text from the weather reports 210e.

The weather report module 220e may include a rain detection algorithm 248 that is configured to determine a rainfall level 132e from the weather report 210e. For example, the rain detection algorithm 248 may include, but it is not limited to, a support vector machine, a neural network, a random forest, a k-means clustering, text processing, etc. In other examples, the rain detection algorithm 248 may include, but it is not limited to, a multi-layer perceptron, an RNN, an RNN LSTM, a CNN, a transformer, or any other suitable type of neural network model. The rain detection algorithm 248 may parse the weather report 210e and extract the weather data 212e from the weather report 210e using a natural language processing algorithm.

The rain detection algorithm 248 may determine a rainfall level 132e from the weather report 210e and weather data 212e. The control device 750 may normalize the rainfall levels 132e in a normalization operation 250c. In the normalization operation 250c, the rainfall level 132e may be represented by a number (e.g., 1 out of 10, 2 out of 10, etc.) or a percentage (e.g., 10%, 20%, etc.).

The control device 750 may normalize the rainfall level 132e by representing the rainfall level 132e in terms of a percentage. The normalized rainfall level 132e may correspond to the nominal rainfall level 136e. The control device 750 may also determine a sub-confidence score 222e of the nominal rainfall level 136e. The sub-confidence score 222e may represent the accuracy of the nominal rainfall level 136e.

In some embodiments, the control device 750 may normalize the sub-confidence scores 222a to 222e so that the sum of sub-confidence scores 222a to 222e is 100%. For example, if the location of the autonomous vehicle 702 is within a threshold distance (e.g., within a mile, two miles, etc.) from a location where the weather report 210e indicates a rainfall level 132e, the control device 750 may determine that the sub-confidence score 222e of the rainfall level 132e should be more than other sub-confidence scores 222a to 222d. In this example, assuming that the sub-confidence scores 222a to 222d are 25%, 20%, 25%, and 10%, respectively, the control device 750 may determine that the sub-confidence score 222e maybe 30%.

The control device 750 may feed the nominal rainfall level 136e to the rain detection fusion module 230. The rain detection fusion module 230 may use this information in determining the aggregated rainfall level 270. This operation is described in greater detail further below in conjunction with the description of the rain detection fusion module 230.

### Determining the aggregated rainfall level

The control device 750 may implement the rain detection fusion module 230 by the processor 122 executing the software instructions 128. The rain detection fusion module 230 may include a hardware and/or software module, and is generally configured to determine the aggregated rainfall level 270. In this operation, the rain detection fusion module 230 may determine an average or mean of the nominal rainfall levels 136a to 136e. The mean of the nominal rainfall levels 136a to 136e may correspond to the aggregated rainfall level 270.

In one embodiment, the control device 750 may assign a weight value 224 to each nominal rainfall level 136 (e.g., each of nominal rainfall levels 136a to 136e) before determining the aggregated rainfall level 270. For example, the control device 750 may assign a weight value 224a to the nominal rainfall level 136a, a weight value 224b to the nominal rainfall level 136b, a weight value 224c to the nominal rainfall level 136c, a weight value 224d to the nominal rainfall level 136d, and a weight value 224e to the nominal rainfall level 136e.

In one embodiment, each weight value 224 may be the same as each other at the beginning of the operational flow 200. Over time, the control device 750 may update or revise the weight values 224a to 224e based on the accuracy of each of the nominal rainfall levels 136a to 136e. For example, over time, the control device 750 may receive feedback 232 from the remote operator 184 that indicates an updated or revised aggregated rainfall level 270. The control device 750 may use the received feedback 232 to increase one or more weight values 224 associated with one or more nominal rainfall levels 136 that are closer to (i.e., within a threshold range, such as within ±1%, ±2%, etc. of) the updated aggregated rainfall level 270 indicated in the feedback 232. The control device 750, based on the feedback 232, may reduce one or more weight values 224 associated with one or more nominal rainfall levels 136 that are further away from (i.e., outside the threshold range of) the updated aggregated rainfall level 270 indicated in the feedback 232. In this manner, the control device 750 may determine a weighted sum of nominal rainfall level 136 and their corresponding weight values 224. Thus, in one embodiment, the control device 750 may determine the aggregated rainfall level 270 by determining the mean of the weighted sum of nominal rainfall level 136 and their corresponding weight values 224.

In a particular example, the control device 750 may determine the weight value 224e for the nominal rainfall level 136e based on a distance between a location of the autonomous vehicle 702 and an area indicated in the weather data 212e. In this process, the control device 750 may determine the location of the autonomous vehicle 702, e.g., Global Positioning System (GPS) location of the autonomous vehicle 702. The control device 750 may also determine an area associated with the weather report 210e. The control device 750 may determine whether the autonomous vehicle 702 is within a threshold distance from the area associated with the weather report 210e. The threshold distance may be one mile, two miles, or any other suitable distance. If it is determined that the autonomous vehicle 702 is within the threshold distance from the area associated with the weather report 210e, the control device 750 may assign a higher weight value 224a to the nominal rainfall level 136e determined from the weather report 210e compared to other weight values 224.

The control device 750 may also determine a confidence score 272 of the aggregated rainfall level 270. The confidence score 272 may represent the accuracy of the aggregated rainfall level 270. The confidence score 272 may be determined based on the distribution and standard deviation of the nominal rainfall levels 136a to 136e, similar to that described above with respect to the sub-confidence score 222a. For example, the confidence score 272 may be inversely proportional to the standard deviation of the nominal rainfall levels 136a to 136e.

In some embodiments, the control device 750 may determine the aggregated rainfall level 270 in a particular time period 274 by combining (e.g., averaging) the nominal rainfall levels 136a to 136e determined during the particular time period 274. The particular time period 274 may be one minute, two minutes, or any other suitable time period. The control device 750 may periodically update or confirm the aggregated rainfall level 270, such as every particular time period 274.

### Updating the aggregated rainfall level based on feedback

Referring back to FIG. 1, in some embodiments, the control device 750 may update or confirm the aggregated rainfall level 270 based on feedback 232 from the remote operator 184 as described below.

The control device 750 may communicate the sensor data 130, rainfall levels 132, nominal rainfall levels 134, updated driving instructions 138, and aggregated rainfall level 270 to the oversight server 160. The remote operator 184 may access the received data directly by accessing the oversight server 160 or indirectly via the application server 180, similar to that described above. The remote operator 184 may review the sensor data 130 and confirm or revise the aggregated rainfall level 270. In a case where the remote operator 184 revises the aggregated rainfall level 270, the remote operator 184 may indicate a particular aggregated rainfall level 270 in the feedback message 232. The remote operator 184 may transmit the feedback message 232 to the control device 750.

The control device 750 may feed the sensor data 130 and the particular aggregated rainfall level 270 (in the feedback 232) to a rainfall level detection module 142. The rainfall level detection module 142 may be implemented by the processor 122 executing software instructions 128, and generally configured to detect aggregated rainfall levels 270 from sensor data 130. For example, the rainfall level detection module 142 may be implemented by neural networks and/or machine learning algorithms, such as a support vector machine, a random forest, a k-means clustering, an image processing, infrared image processing, radar data processing, point cloud processing, rain sensor data processing, and/or any other data type format processing.

The rainfall level detection module 142 may learn to associate the particular rainfall level 270 (feedback 232 from the remote operator 184) with the sensor data 130 by extracting features from the sensor data 130 and associating the extracted features to the particular rainfall level 270. Thus, the control device 750 may train the rainfall level detection module 142 to learn to associate the sensor data 130 to the particular rainfall level 270 (feedback from the remote operator 184). The control device 750 may use this information to determine future aggregated rainfall levels 270.

### Updating driving instructions based on the determined aggregated rainfall level

In some cases where it is raining on the road 102 traveled by the autonomous vehicle 702, driving instructions 150 of the autonomous vehicle 702 may be updated to provide safer driving conditions for the autonomous vehicle 702, other vehicles on the road 102, and pedestrians. Thus, upon determining the aggregated rainfall level 270, the control device 750 may update the driving instructions 150 of the autonomous vehicle 702 (i.e., updated driving instructions 138) based on the aggregated rainfall level 270. For example, the updated driving instructions 138 may include one or more of increasing a following distance, increasing a planned stopping distance, turning on headlights, reducing the average traveling speed, turning on the fog light according to the severity of the weather condition, turning on the hazard light according to the severity of the weather condition, and turning on windshield wipers.

The following distance may correspond to a distance between the autonomous vehicle 702 and an object in front of the autonomous vehicle 702 on the road 102, such as another vehicle, a pedestrian, or any other object. The planned stopping distance may correspond to a distance that the autonomous vehicle 702 plans to start activating the brakes 748b (see FIG. 7) before stopping at a stop sign. The increase in the following distance may be proportional to the aggregated rainfall level 270. For example, a higher aggregated rainfall level 270 may indicate a more severe rain and/or a more severe weather condition. Thus, for a higher aggregated rainfall level 270, the following distance may be increased more compared to a lesser aggregated rainfall level 270. Similarly, the increase in the planned stopping distance may be proportional to the aggregated rainfall level 270. Thus, for a higher aggregated rainfall level 270, the planned stopping distance may be increased more compared to a lesser aggregated rainfall level 270.

### Selecting an object detection algorithm based on the aggregated rainfall level

In some cases, while it is raining on the road 102 traveled by the autonomous vehicle 702, the rain may cause noise and interference in the sensor data 130. For example, during rain, images captured by the cameras 210c (see FIG. 2) may include rain-induced noise and interference, such as rain lines or rain streaks. Other examples of rain-induced noise and interference in sensor data 130 may include changes in temperatures of objects detected by a sensor 746, obstructing detecting an object by a sensor 746, obstructing a field of view of a sensor 746, noises from the sound of the rain, fog on a housing of a sensor 746, raindrops on a housing of a sensor 746, among others.

Thus, the control device 750 may be configured to counter the rain-induced noise and interference in the sensor data 130. To this end, the control device 750 may use mapping tables 400 illustrated in FIG. 4.

As noted above, each mapping table 400 may be associated with a different type of sensor 746. Different types of sensor 746 may include LiDAR sensors 210b, cameras 210c, and infrared cameras 210d. A mapping table 400 associated with a sensor 746 may include the mapping between different object detection algorithms 410 and aggregated rainfall levels 270. Each object detection algorithm 410 may be implemented by the sensor 746 when a corresponding aggregated rainfall level 270 is detected.

Each object detection algorithm 410 may be configured to filter at least a portion of the rain-induced noise and interference caused by the corresponding aggregated rainfall level 270 in the sensor data 130 captured by the sensor 746. For example, a different level and degree of rain-induced noise filtering method may be implemented in each object detection algorithm 410. For example, if the aggregated rainfall level 270 is determined to be 90%, a higher level and degree of rain-induced noise filtering method (e.g., level 9, level 8 rain-induced noise filtering method) may be implemented in the object detection algorithm 410 that is used to filter out at least a portion of the rain-induced noises in the sensor data 130.

Example mapping tables 400 are shown in FIG. 4. The control device 750 may perform one or more of the following operations for each type of sensor 746. Upon determining a particular aggregated rainfall level 270, the control device 750 may search the mapping table 400 that is associated with the particular type of sensor 746 to select a particular object detection algorithm 410 associated with the particular type of sensor 746, where the particular object detection algorithm 410 is pre-mapped with the particular aggregated rainfall level 270. The control device 750 may cause the particular object detection algorithm 410 to be implemented for the particular type of sensors 746.

Referring to FIG. 4, a first mapping table 400a is associated with LiDAR sensors 210b. The first mapping table 400a includes different aggregated rainfall levels 270 mapped with different object detection algorithms 410a. For example, an aggregated rainfall level 270a is mapped with an object detection algorithm 410a-1, an aggregated rainfall level 270b is mapped with an object detection algorithm 410a-2, and so on. The object detection algorithms 410a may be configured to detect objects from LiDAR sensor data 212b (see FIG. 2). For example, the object detection algorithms 410a may be implemented using neural networks and/or machine learning algorithms for detecting objects from LiDAR sensor data 212b that includes point clouds. Thus, whichever aggregated rainfall level 270 is determined, the control device 750 may select a particular object detection algorithm 410a associated with the determined aggregated rainfall level 270 to be implemented for object detection by the LiDAR sensors 210b.

The second mapping table 400b is associated with cameras 210c. The second mapping table 400b includes different aggregated rainfall levels 270 mapped with different object detection algorithms 410b. For example, the aggregated rainfall level 270a is mapped with an object detection algorithm 410b-1, the aggregated rainfall level 270b is mapped with an object detection algorithm 410b-2, and so on. The object detection algorithms 410b may be configured to detect objects from images 212c (see FIG. 2). For example, the object detection algorithms 410b may be implemented using neural networks and/or machine learning algorithms for detecting objects from images 212c. Thus, whichever aggregated rainfall level 270 is determined, the control device 750 may select a particular object detection algorithm 410b associated with the determined aggregated rainfall level 270 to be implemented for object detection by the cameras 210c.

The third mapping table 400c is associated with infrared cameras 210d. The third mapping table 400c includes different aggregated rainfall levels 270 mapped with different object detection algorithms 410c. For example, the aggregated rainfall level 270a is mapped with an object detection algorithm 410c-1, the aggregated rainfall level 270b is mapped with an object detection algorithm 410c-2, and so on. The object detection algorithms 410c may be configured to detect objects from infrared images 212d (see FIG. 2). For example, the object detection algorithms 410c may be implemented using neural networks and/or machine learning algorithms for detecting objects from infrared images 212d. Thus, whichever aggregated rainfall level 270 is determined, the control device 750 may select a particular object detection algorithm 410c associated with the determined aggregated rainfall level 270 to be implemented for object detection by the infrared cameras 210d. Similarly, the mapping tables 400 may include other mapping tables 400 for other types of sensors 746, such as radar sensors 746b, temperature sensor 746c, and other types of sensors 746 described in FIG. 7.

In some embodiments, each mapping table 400 may include the mapping between different ranges of aggregated rainfall levels 270 and object detection algorithms 410. For example, a first range of aggregated rainfall levels 270 (e.g., 5-10%) may be mapped with a first object detection algorithm 410, a second range of aggregated rainfall levels 270 (e.g., 11-15%) may be mapped with a second object detection algorithm 410, and so on.

Referring back to FIG. 1, thus, the control device 750 may use other mapping tables 400 associated with other types of sensors 746 to implement different object detection algorithms 410 depending on the determined aggregated rainfall level 270.

### Scheduling sensor cleaning based on the aggregated rainfall level

In some cases, housings of the sensors 746 may need to be cleaned more often depending on the amount of rain on the autonomous vehicle 702. In such cases, the control device 750 may schedule a sensor cleaning operation 140, where the sensor cleaning operation 140 is scheduled based on the determined aggregated rainfall level 270. To this end, the control device 750 may send signals periodically to a cleaning device 510 that is configured to clean (e.g., wipe over) the housings of sensors 746, to cause the cleaning device 510 to clean the housings of the sensors 746, where the signals are scheduled according to the sensor cleaning operation 140, e.g., every minute, every thirty seconds, or any other suitable interval. The description of the cleaning device 510 is described below in FIG. 5.

The housings of one or more sensors 746 may be scheduled to be cleaned more frequently for a higher determined aggregated rainfall level 270. For example, the control device 750 may cause the cleaning device 510 to clean the housings of one or more sensors 746 every second if the aggregated rainfall level 270 is above 80%. Similarly, the control device 750 may schedule the cleaning (e.g., wiping) of the front window of the autonomous vehicle 702 according to the aggregated rainfall level 270. For example, the control device 750 may send a signal to the wiper system 746h (see FIG. 7) to clean the front window of the autonomous vehicle 702 according to the aggregated rainfall level 270.

### Communicating the aggregated rainfall level to other autonomous vehicles

In some cases, a fleet of autonomous vehicles 702 may be traveling on the same route and/or have the same destination. Thus, it may improve the navigation of autonomous vehicles 702 if a determined aggregated rainfall level 270 is reported to other autonomous vehicles 702. In an example scenario, assume that the autonomous vehicle 702 is traveling along the road 102 and the control device 750 determines an aggregated rainfall level 270, similar to that described in FIG. 2.

In one embodiment, the control device 750 may communicate the aggregated rainfall level 270 to the oversight server 160. The oversight server 160 may identify one or more autonomous vehicles 702 that may be impacted by the rain detected at the location of the autonomous vehicle 702. For example, the oversight server 160 may identify one or more autonomous vehicles 702 that are behind the autonomous vehicle 702 and are heading toward the location where the aggregated rainfall level 270 is reported from and will reach that area within a threshold time period, e.g., within twenty minutes, thirty minutes, or any other suitable time period. In other words, the oversight server 160 may identify one or more autonomous vehicles 702 that would experience the aggregated rainfall level 270. For example, the oversight server 160 may identify one or more autonomous vehicles 702 within a threshold distance from the autonomous vehicle 702, e.g., within twenty miles, thirty miles, or any other suitable distance from the autonomous vehicle 702.

The oversight server 160 may communicate the aggregated rainfall level 270 and the location associated with the aggregated rainfall level 270 to the identified autonomous vehicles 702 to perform one or more operations described herein, such as schedule the sensor cleaning operation 140, update driving instructions 150, implement a particular object detection algorithm 410, among others. The identified autonomous vehicles 702 may use the received aggregated rainfall level 270 as a feed-forward input to their rain detection fusion module 230 to determine a more accurate aggregated rainfall level 270 depending on their location and environment.

In one embodiment, upon detection of the aggregated rainfall level 270, the control device 750 may communicate a message to one or more autonomous vehicles 702 traveling on the road 102 behind the autonomous vehicle 702 indicating the aggregated rainfall level 270 at the location of the autonomous vehicle 702. For example, the control device 750 may communicate the message to autonomous vehicles 702 that are within a Vehicle-to-Vehicle (V2V) communication range from the autonomous vehicle 702.

FIG. 3 illustrates example calibration curves 300a and 300b. Aspects of the calibration curves 300a and 300b are described above in conjunction with FIG. 2. The calibration curve 300a may be associated with rain sensors 210a. The calibration curve 300b may be associated with LiDAR sensors 210b. Each calibration curve 300 may be determined based on the output of the corresponding type of sensor 746, the speed of the autonomous vehicle 702, and the characteristics of the sensor 746 found in its datasheet.

FIG. 4 illustrates example mapping tables 400a, 400b, and 400c. Aspects of the mapping tables 400a, 400b, and 400c are described above in conjunction with FIG. 2. Each mapping table 400 may include a mapping between rainfall levels 270 and object detection algorithm 410. Each mapping table 400 may be associated with a different type of sensor 746. For example, the mapping table 400a may be associated with LiDAR sensors 210b, the mapping table 400b may be associated with cameras 210c, and the mapping table 400c may be associated with infrared cameras 210d.

FIG. 5 illustrates example locations where sensors 746 may be located on an autonomous vehicle 702. Aspects of locations of the sensors 746 are described above in conjunction with FIG. 2. For example, any combination of sensors 746 may be located on the roof of the autonomous vehicle, above the front window, on a side, on a side door, adjacent to headlights, behind the front window, in a compartment integrated into a body of the autonomous vehicle 702, and/or any location with respect to the autonomous vehicle 702.

The rainfall level 132 detected by a sensor 746 may vary depending on the location of the sensor 746 and the speed of the autonomous vehicle 702, similar to that described in FIG. 2.

The cleaning device 510 may be used to clean (e.g., wipe over) one or more sensors 746 during the sensor cleaning operation 140 based on the aggregated rainfall level 270, similar to that described in FIGS. 1 and 2.

The cleaning device 510 may include any component that is configured to enable the cleaning device 510 to perform its functions. For example, the cleaning device 510 may include a wiper blade coupled (e.g., connected) to the control device 750. The cleaning device 510 may be coupled to the control device 750, e.g., through wires or wirelessly. In one example, the cleaning device 510 may be similar to windshield wipers.

### Example method for detecting rainfall for an autonomous vehicle

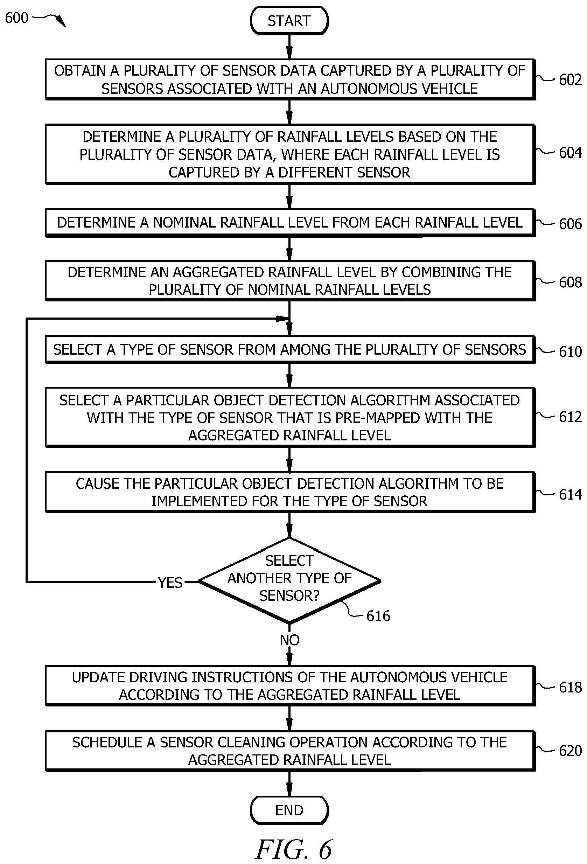

FIG. 6 illustrates an example flowchart of a method 600 for detecting rainfall for an autonomous vehicle 702. Modifications, additions, or omissions may be made to method 600. Method 600 may include more, fewer, or other operations. For example, operations may be performed in parallel or in any suitable order. While at times discussed as the autonomous vehicle 702, control device 750, oversight server 160, or components of any of thereof performing operations, any suitable system or components of the system may perform one or more operations of the method 600. For example, one or more operations of method 600 may be implemented, at least in part, in the form of software instructions 128, software instructions 170, and processing instructions 780, respectively, from FIGS. 1 and 7, stored on non-transitory, tangible, machine-readable media (e.g., memory 126, memory 168, and data storage 790, respectively, from FIGS. 1 and 7) that when run by one or more processors (e.g., processors 122 and 770, respectively, from FIGS. 1 and 7) may cause the one or more processors to perform 602-620.

At 602, the control device 750 may obtain a plurality of sensor data 130 captured by a plurality of sensors 746 associated with an autonomous vehicle 702. For example, the plurality of sensor data 130 may include rain sensor data 212a, LiDAR sensor data 212b, images/videos 212c, and infrared images/videos 212d. The plurality of sensors 746 may include rain sensors 210a, LiDAR sensors 210b, cameras 210c, and infrared cameras 210d. The plurality of sensors 746 and sensor data 130 are described in FIG. 2. In some embodiments, the control device 750 may capture weather data 212e from weather report 210e, and include the weather data 212e in the plurality of sensor data 130.

At 604, the control device 750 may determine a plurality of rainfall levels 132 based on the plurality of sensor data 130, where each rainfall level 132 is captured by a different sensor 746. For example, the control device 750 may determine a rainfall level 132a from the rain sensor data 212a by implementing the rain sensor module 220a, a rainfall level 132b from the LiDAR sensor data 212b by implementing the LiDAR sensor module 220b, a rainfall level 132c from the images 212c by implementing the camera module 220c, a rainfall level 132d from the infrared images 212d by implementing the infrared camera module 220d, and a rainfall level 132e from the weather data 212e by implementing the weather report module 220e, similar to that described in FIG. 2.

At 606, the control device 750 may determine a nominal rainfall level 136 for each rainfall level 132. For example, the control device 750 may determine a nominal rainfall level 136a from the rainfall levels 132a, a nominal rainfall level 136b from the rainfall levels 132b, a nominal rainfall level 136c from the rainfall levels 132c, a nominal rainfall level 136d from the rainfall levels 132d, a nominal rainfall level 136e from the rainfall level 132e, similar to that described in FIGS. 2 and 3.

At 608, the control device 750 may determine an aggregated rainfall level 270 by combining the plurality of nominal rainfall levels 136. For example, the control device 750 may determine the mean of the plurality of nominal rainfall levels 136 by implementing the rain detection fusion module 230, similar to that described in FIG. 2.

At 610, the control device 750 may select a type of sensor 746 from among the plurality of sensors 746. For example, different types of sensors 746 may include LiDAR sensors 210b, cameras 210c, and infrared cameras 210d. The control device 750 may iteratively select a type of sensor 746 until no type of sensor 746 is left for evaluation.

At 612, the control device 750 may select a particular object detection algorithm 410 associated with the type of sensor 746 that is pre-mapped with the aggregated rainfall level 270. For example, the control device 750 may use a mapping table 400 (illustrated in FIG. 4) that is associated with the selected type of sensor 746 to select the particular object detection algorithm 410 that is pre-mapped with the aggregated rainfall level 270, similar to that described in FIGS 2 and 4. The particular object detection algorithm 410 may be configured to filter at least a portion of interference caused by the aggregated rainfall level 270 in the sensor data 130 captured by the selected type of sensor 746, similar to that described in FIGS 2 and 4.

At 614, the control device 750 may cause the particular object detection algorithm 410 to be implemented for the type of sensor 746. For example, the particular object detection algorithm 410 may be used for detecting objects from the sensor data 130 captured by the type of sensor 746.

At 616, the control device 750 may determine whether to select another type of sensor 746. The control device 750 may determine to select another type of sensor 746 if at least one type of sensor 746 is left for evaluation. If the control device 750 determines to select another type of sensor 746, method 600 may return to 610. Otherwise, method 600 may proceed to 618.

At 618, the control device 750 may update the driving instructions 150 of the autonomous vehicle 702 according to the aggregated rainfall level 270. For example, the updated driving instructions 138 may include one or more of increasing a following distance, increasing a planned stopping distance, turning on headlights, reducing the average traveling speed, and turning on windshield wipers.

At 620, the control device 750 may schedule a sensor cleaning operation 140 according to the aggregated rainfall level 270. For example, the control device 750 may send signals periodically to the cleaning device 510 that is configured to clean (e.g., wipe over) the housings of sensors 746, to cause the cleaning device 510 to clean the housings of the sensors 746, where the signals are scheduled according to the sensor cleaning operation 140, e.g., every minute, every thirty seconds, or any other suitable interval. In some embodiments, method 600 may include communicating the aggregated rainfall level 270 and a location it is determined to one or more autonomous vehicles 702, similar to that described in FIG. 1.

### Example autonomous vehicle and its operation

FIG. 7 shows a block diagram of an example vehicle ecosystem 700 in which autonomous driving operations can be determined. As shown in FIG. 7, the autonomous vehicle 702 may be a semi-trailer truck. The vehicle ecosystem 700 may include several systems and components that can generate and/or deliver one or more sources of information/data and related services to the in-vehicle control computer 750 that may be located in an autonomous vehicle 702. The in-vehicle control computer 750 can be in data communication with a plurality of vehicle subsystems 740, all of which can be resident in the autonomous vehicle 702. A vehicle subsystem interface 760 may be provided to facilitate data communication between the in-vehicle control computer 750 and the plurality of vehicle subsystems 740. In some embodiments, the vehicle subsystem interface 760 can include a controller area network (CAN) controller to communicate with devices in the vehicle subsystems 740.

The autonomous vehicle 702 may include various vehicle subsystems that support the operation of autonomous vehicle 702. The vehicle subsystems 740 may include a vehicle drive subsystem 742, a vehicle sensor subsystem 744, a vehicle control subsystem 748, network communication subsystem 792 and/or cleaning device 510. The components or devices of the vehicle drive subsystem 742, the vehicle sensor subsystem 744, and the vehicle control subsystem 748 shown in FIG. 7 are examples. The autonomous vehicle 702 may be configured as shown or any other configurations.

The vehicle drive subsystem 742 may include components operable to provide powered motion for the autonomous vehicle 702. In an example embodiment, the vehicle drive subsystem 742 may include an engine/motor 742a, wheels/tires 742b, a transmission 742c, an electrical subsystem 742d, and a power source 742e.

The vehicle sensor subsystem 744 may include a number of sensors 746 configured to sense information about an environment or condition of the autonomous vehicle 702. The vehicle sensor subsystem 744 may include one or more cameras 746a or image capture devices, a radar unit 746b, one or more temperature sensors 746c, a wireless communication unit 746d (e.g., a cellular communication transceiver), an inertial measurement unit (IMU) 746e, a laser range finder/LiDAR unit 746f, a Global Positioning System (GPS) transceiver 746g, a wiper control system 746h, one or more rain sensors 746i, and/or infrared cameras 746j. The vehicle sensor subsystem 744 may also include sensors configured to monitor internal systems of the autonomous vehicle 702 (e.g., an 02 monitor, a fuel gauge, an engine oil temperature, etc.).

The IMU 746e may include any combination of sensors (e.g., accelerometers and gyroscopes) configured to sense position and orientation changes of the autonomous vehicle 702 based on inertial acceleration. The GPS transceiver 746g may be any sensor configured to estimate a geographic location of the autonomous vehicle 702. For this purpose, the GPS transceiver 746g may include a receiver/transmitter operable to provide information regarding the position of the autonomous vehicle 702 with respect to the Earth. The radar unit 746b may represent a system that utilizes radio signals to sense objects within the local environment of the autonomous vehicle 702. In some embodiments, in addition to sensing the objects, the radar unit 746b may additionally be configured to sense the speed and the heading of the objects proximate to the autonomous vehicle 702. The laser range finder or LiDAR unit 746f may be any sensor configured to use lasers to sense objects in the environment in which the autonomous vehicle 702 is located. The cameras 746a may include one or more devices configured to capture a plurality of images of the environment of the autonomous vehicle 702. The cameras 746a may be still image cameras or motion video cameras. The infrared cameras 746j may include one or more devices configured to capture a plurality of infrared images of the environment of the autonomous vehicle 702. The cameras 746a may be still infrared image cameras or motion video infrared cameras. The rain sensors 746i may include one or more devices configured to detect liquid levels (e.g., raindrops, moisture) on sensing area of the rain sensors 746i.

The vehicle control subsystem 748 may be configured to control the operation of the autonomous vehicle 702 and its components. Accordingly, the vehicle control subsystem 748 may include various elements such as a throttle and gear selector 748a, a brake unit 748b, a navigation unit 748c, a steering system 748d, and/or an autonomous control unit 748e. The throttle and gear selector 748a may be configured to control, for instance, the operating speed of the engine and, in turn, control the speed of the autonomous vehicle 702. The throttle and gear selector 748a may be configured to control the gear selection of the transmission. The brake unit 748b can include any combination of mechanisms configured to decelerate the autonomous vehicle 702. The brake unit 748b can slow the autonomous vehicle 702 in a standard manner, including by using friction to slow the wheels or engine braking. The brake unit 748b may include an anti-lock brake system (ABS) that can prevent the brakes from locking up when the brakes are applied. The navigation unit 748c may be any system configured to determine a driving path or route for the autonomous vehicle 702. The navigation unit 748c may additionally be configured to update the driving path dynamically while the autonomous vehicle 702 is in operation. In some embodiments, the navigation unit 748c may be configured to incorporate data from the GPS transceiver 746g and one or more predetermined maps so as to determine the driving path for the autonomous vehicle 702. The steering system 748d may represent any combination of mechanisms that may be operable to adjust the heading of autonomous vehicle 702 in an autonomous mode or in a driver-controlled mode.

The autonomous control unit 748e may represent a control system configured to identify, evaluate, and avoid or otherwise negotiate potential obstacles or obstructions in the environment of the autonomous vehicle 702. In general, the autonomous control unit 748e may be configured to control the autonomous vehicle 702 for operation without a driver or to provide driver assistance in controlling the autonomous vehicle 702. In some embodiments, the autonomous control unit 748e may be configured to incorporate data from the GPS transceiver 746g, the radar unit 746b, the LiDAR unit 746f, the cameras 746a, and/or other vehicle subsystems to determine the driving path or trajectory for the autonomous vehicle 702.

The network communication subsystem 792 may comprise network interfaces, such as routers, switches, modems, and/or the like. The network communication subsystem 792 may be configured to establish communication between the autonomous vehicle 702 and other systems including the oversight server 160 of FIG. 1. The network communication subsystem 792 may be further configured to send and receive data from and to other systems.

The cleaning device 510 may comprise components that enable+ the cleaning device 510 to clean the sensors 746.

Many or all of the functions of the autonomous vehicle 702 can be controlled by the in-vehicle control computer 750. The in-vehicle control computer 750 may include at least one data processor 770 (which can include at least one microprocessor) that executes processing instructions 780 stored in a non-transitory computer-readable medium, such as the data storage device 790 or memory. The in-vehicle control computer 750 may also represent a plurality of computing devices that may serve to control individual components or subsystems of the autonomous vehicle 702 in a distributed fashion. In some embodiments, the data storage device 790 may contain processing instructions 780 (e.g., program logic) executable by the data processor 770 to perform various methods and/or functions of the autonomous vehicle 702, including those described with respect to FIGS. 1-9.

The data storage device 790 may contain additional instructions as well, including instructions to transmit data to, receive data from, interact with, or control one or more of the vehicle drive subsystem 742, the vehicle sensor subsystem 744, and the vehicle control subsystem 748. The in-vehicle control computer 750 can be configured to include a data processor 770 and a data storage device 790. The in-vehicle control computer 750 may control the function of the autonomous vehicle 702 based on inputs received from various vehicle subsystems (e.g., the vehicle drive subsystem 742, the vehicle sensor subsystem 744, and the vehicle control subsystem 748).

FIG. 8 shows an exemplary system 800 for providing precise autonomous driving operations. The system 800 may include several modules that can operate in the in-vehicle control computer 750, as described in FIG. 7. The in-vehicle control computer 750 may include a sensor fusion module 802 shown in the top left corner of FIG. 8, where the sensor fusion module 802 may perform at least four image or signal processing operations. The sensor fusion module 802 can obtain images from cameras located on an autonomous vehicle to perform image segmentation 804 to detect the presence of moving objects (e.g., other vehicles, pedestrians, etc.,) and/or static obstacles (e.g., stop sign, speed bump, terrain, etc.,) located around the autonomous vehicle. The sensor fusion module 802 can obtain LiDAR point cloud data item from LiDAR sensors located on the autonomous vehicle to perform LiDAR segmentation 806 to detect the presence of objects and/or obstacles located around the autonomous vehicle. The sensor fusion module 802 may obtain aggregated rainfall level 270 (see FIG. 2) from the rain detection fusion module 230 (see FIG. 2). The sensor fusion module 802 may use the aggregated rainfall level 270 to perform one or more functions described herein, such as updating driving instructions of the autonomous vehicle, planning 862, interference 846, control 870, among others.

The sensor fusion module 802 can perform instance segmentation 808 on image and/or point cloud data items to identify an outline (e.g., boxes) around the objects and/or obstacles located around the autonomous vehicle. The sensor fusion module 802 can perform temporal fusion 810 where objects and/or obstacles from one image and/or one frame of point cloud data item are correlated with or associated with objects and/or obstacles from one or more images or frames subsequently received in time.

The sensor fusion module 802 can fuse the objects and/or obstacles from the images obtained from the camera and/or point cloud data item obtained from the LiDAR sensors. For example, the sensor fusion module 802 may determine based on a location of two cameras that an image from one of the cameras comprising one half of a vehicle located in front of the autonomous vehicle is the same as the vehicle captured by another camera. The sensor fusion module 802 may send the fused object information to the interference module 846 and the fused obstacle information to the occupancy grid module 860. The in-vehicle control computer may include the occupancy grid module 860 which can retrieve landmarks from a map database 858 stored in the in-vehicle control computer. The occupancy grid module 860 can determine drivable areas and/or obstacles from the fused obstacles obtained from the sensor fusion module 802 and the landmarks stored in the map database 858. For example, the occupancy grid module 860 can determine that a drivable area may include a speed bump obstacle.

Below the sensor fusion module 802, the in-vehicle control computer 750 may include a LiDAR-based object detection module 812 that can perform object detection 816 based on point cloud data item obtained from the LiDAR sensors 814 located on the autonomous vehicle. The object detection 816 technique can provide a location (e.g., in 3D world coordinates) of objects from the point cloud data item. Below the LiDAR-based object detection module 812, the in-vehicle control computer may include an image-based object detection module 818 that can perform object detection 824 based on images obtained from cameras 820 located on the autonomous vehicle. The object detection 818 technique can employ a deep machine learning technique 824 to provide a location (e.g., in 3D world coordinates) of objects from the image provided by the camera 820.

The radar 856 on the autonomous vehicle can scan an area in front of the autonomous vehicle or an area towards which the autonomous vehicle is driven. The radar data may be sent to the sensor fusion module 802 that can use the radar data to correlate the objects and/or obstacles detected by the radar 856 with the objects and/or obstacles detected from both the LiDAR point cloud data item and the camera image. The radar data also may be sent to the interference module 846 that can perform data processing on the radar data to track objects by object tracking module 848 as further described below.

The in-vehicle control computer may include an interference module 846 that receives the locations of the objects from the point cloud and the objects from the image, and the fused obj ects from the sensor fusion module 802. The interference module 846 also receives the radar data with which the interference module 846 can track objects by object tracking module 848 from one point cloud data item and one image obtained at one time instance to another (or the next) point cloud data item and another image obtained at another subsequent time instance.

The interference module 846 may perform object attribute estimation 850 to estimate one or more attributes of an object detected in an image or point cloud data item. The one or more attributes of the object may include a type of object (e.g., pedestrian, car, or truck, etc.). The interference module 846 may perform behavior prediction 852 to estimate or predict motion pattern of an object detected in an image and/or a point cloud. The behavior prediction 852 can be performed to detect a location of an object in a set of images received at different points in time (e.g., sequential images) or in a set of point cloud data item received at different points in time (e.g., sequential point cloud data items). In some embodiments, the behavior prediction 852 can be performed for each image received from a camera and/or each point cloud data item received from the LiDAR sensor. In some embodiments, the interference module 846 can be performed (e.g., run or executed) to reduce computational load by performing behavior prediction 852 on every other or after every pre-determined number of images received from a camera or point cloud data item received from the LiDAR sensor (e.g., after every two images or after every three-point cloud data items).

The behavior prediction 852 feature may determine the speed and direction of the objects that surround the autonomous vehicle from the radar data, where the speed and direction information can be used to predict or determine motion patterns of objects. A motion pattern may comprise a predicted trajectory information of an object over a pre-determined length of time in the future after an image is received from a camera. Based on the motion pattern predicted, the interference module 846 may assign motion pattern situational tags to the objects (e.g., "located at coordinates (x,y)," "stopped," "driving at 50mph," "speeding up" or "slowing down"). The situation tags can describe the motion pattern of the object. The interference module 846 may send the one or more object attributes (e.g., types of the objects) and motion pattern situational tags to the planning module 862. The interference module 846 may perform an environment analysis 854 using any information acquired by system 800 and any number and combination of its components.

The in-vehicle control computer may include the planning module 862 that receives the object attributes and motion pattern situational tags from the interference module 846, the drivable area and/or obstacles, and the vehicle location and pose information from the fused localization module 826 (further described below).

The planning module 862 can perform navigation planning 864 to determine a set of trajectories on which the autonomous vehicle can be driven. The set of trajectories can be determined based on the drivable area information, the one or more object attributes of objects, the motion pattern situational tags of the objects, location of the obstacles, and the drivable area information. In some embodiments, the navigation planning 864 may include determining an area next to the road where the autonomous vehicle can be safely parked in case of emergencies. The planning module 862 may include behavioral decision making 866 to determine driving actions (e.g., steering, braking, throttle) in response to determining changing conditions on the road (e.g., traffic light turned yellow, or the autonomous vehicle is in an unsafe driving condition because another vehicle drove in front of the autonomous vehicle and in a region within a pre-determined safe distance of the location of the autonomous vehicle). The planning module 862 performs trajectory generation 868 and selects a trajectory from the set of trajectories determined by the navigation planning operation 864. The selected trajectory information may be sent by the planning module 862 to the control module 870.

The in-vehicle control computer may include a control module 870 that receives the proposed trajectory from the planning module 862 and the autonomous vehicle location and pose from the fused localization module 826. The control module 870 may include a system identifier 872. The control module 870 can perform a model-based trajectory refinement 874 to refine the proposed trajectory. For example, the control module 870 can apply filtering (e.g., Kalman filter) to make the proposed trajectory data smooth and/or to minimize noise. The control module 870 may perform the robust control 876 by determining, based on the refined proposed trajectory information and current location and/or pose of the autonomous vehicle, an amount of brake pressure to apply, a steering angle, a throttle amount to control the speed of the vehicle, and/or a transmission gear. The control module 870 can send the determined brake pressure, steering angle, throttle amount, and/or transmission gear to one or more devices in the autonomous vehicle to control and facilitate precise driving operations of the autonomous vehicle.

The deep image-based object detection 824 performed by the image-based object detection module 818 can also be used detect landmarks (e.g., stop signs, speed bumps, etc.,) on the road. The in-vehicle control computer may include a fused localization module 826 that obtains landmarks detected from images, the landmarks obtained from a map database 836 stored on the in-vehicle control computer, the landmarks detected from the point cloud data item by the LiDAR-based object detection module 812, the speed and displacement from the odometer sensor 844 and the estimated location of the autonomous vehicle from the GPS/IMU sensor 838 (i.e., GPS sensor 840 and IMU sensor 842) located on or in the autonomous vehicle. Based on this information, the fused localization module 826 can perform a localization operation 828 to determine a location of the autonomous vehicle, which can be sent to the planning module 862 and the control module 870.

The fused localization module 826 can estimate pose 830 of the autonomous vehicle based on the GPS and/or IMU sensors 838. The pose of the autonomous vehicle can be sent to the planning module 862 and the control module 870. The fused localization module 826 can also estimate status (e.g., location, possible angle of movement) of the trailer unit based on (e.g., trailer status estimation 834), for example, the information provided by the IMU sensor 842 (e.g., angular rate and/or linear velocity). The fused localization module 826 may also check the map content 832.

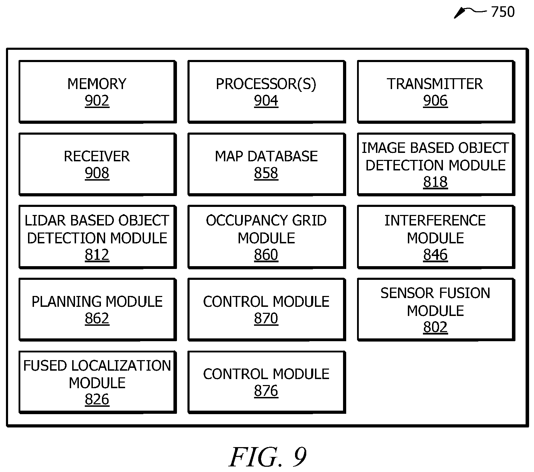

FIG. 9 shows an exemplary block diagram of an in-vehicle control computer 750 included in an autonomous vehicle 702. The in-vehicle control computer 750 may include at least one processor 904 and a memory 902 having instructions stored thereupon (e.g., software instructions 128 and processing instructions 780 in FIGS. 1 and 7, respectively). The instructions, upon execution by the processor 904, configure the in-vehicle control computer 750 and/or the various modules of the in-vehicle control computer 750 to perform the operations described in FIGS. 1-9. The transmitter 906 may transmit or send information or data to one or more devices in the autonomous vehicle. For example, the transmitter 906 can send an instruction to one or more motors of the steering wheel to steer the autonomous vehicle. The receiver 908 receives information or data transmitted or sent by one or more devices. For example, the receiver 908 receives a status of the current speed from the odometer sensor or the current transmission gear from the transmission. The transmitter 906 and receiver 908 also may be configured to communicate with the plurality of vehicle subsystems 740 and the in-vehicle control computer 750 described above in FIGS. 7 and 8.

While several embodiments have been provided in this disclosure, it should be understood that the disclosed systems and methods might be embodied in many other specific forms without departing from the spirit or scope of this disclosure. The present examples are to be considered as illustrative and not restrictive, and the intention is not to be limited to the details given herein. For example, the various elements or components may be combined or integrated into another system or certain features may be omitted, or not implemented.

In addition, techniques, systems, subsystems, and methods described and illustrated in the various embodiments as discrete or separate may be combined or integrated with other systems, modules, techniques, or methods without departing from the scope of this disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the spirit and scope disclosed herein.

To aid the Patent Office, and any readers of any patent issued on this application in interpreting the claims appended hereto, applicants note that they do not intend any of the appended claims to invoke 35 U.S.C. § 112(f) as it exists on the date of filing hereof unless the words "means for" or "step for" are explicitly used in the particular claim.

Implementations of the disclosure can be described in view of the following clauses, the features of which can be combined in any reasonable manner.

Clause 1. A system, comprising:
an autonomous vehicle configured to travel along a road, wherein the autonomous vehicle is associated with a plurality of sensors, wherein each sensor from among the plurality of sensors is configured to capture sensor data; and
a control device associated with the autonomous vehicle and comprising at least one processor configured to at least:
   obtain a plurality of sensor data captured by the plurality of sensors;
   determine a plurality of rainfall levels based at least in part upon the plurality of sensor data, wherein each rainfall level from among the plurality of rainfall levels is captured by a different sensor from among the plurality of sensors, wherein to determine the plurality of rainfall levels, the at least one processor is further configured to at least:
      for at least one sensor from among the plurality of sensors:
         capturing a first sensor data when it is raining on the autonomous vehicle;
         capturing a second sensor data when it is not raining on the autonomous vehicle;
         comparing the first sensor data with the second sensor data;
         determining a difference between the first sensor data and the second sensor data;
         determining that the difference between the first sensor data and the second sensor data is due to rainfall; and
         determining a rainfall level associated with the at least one sensor, wherein the rainfall level corresponds to the difference between the first sensor data and the second sensor data;
      determine an aggregated rainfall level in a particular time period by combining the plurality of rainfall levels determined during the particular time period.

Clause 2. The system of Clause 1, wherein the at least one processor is further configured to at least update driving instructions associated with the autonomous vehicle based at least in part upon the determined aggregated rainfall level,
wherein the updated driving instructions comprises one or more of increasing a following distance, increasing a planned stopping distance, turning on headlights, and turning on windshield wipers.

Clause 3. The system of Clause 2, wherein increasing the following distance is proportional to the determined aggregated rainfall level, and
wherein increasing the planned stopping distance is proportional to the determined aggregated rainfall level.

Clause 4. The system of Clause 1, wherein the at least one processor is further configured to at least schedule a sensor cleaning operation based at least in part upon the determined aggregated rainfall level such that a housing of at least one sensor is scheduled to be cleaned more frequently for a higher determined aggregated rainfall level.

Clause 5. The system of Clause 1, wherein the plurality of rainfall levels is determined from one or more of at least one rain sensor, at least one light detection and ranging (LiDAR) sensor, at least one camera, at least one infrared sensor, and a weather report.

Clause 6. The system of Clause 1, wherein to combine the plurality of rainfall levels, the at least one processor is further configured to at least determine a mean of a plurality of nominal rainfall levels, and
wherein each nominal rainfall level from among the plurality of nominal rainfall levels is mapped with a corresponding rainfall level from among the plurality of rainfall levels.

Clause 7. The system of Clause 1, wherein the at least one processor is further configured to at least:
for the at least one sensor:
select a particular object detection algorithm associated with the at least one sensor that is pre-mapped with the determined aggregated rainfall level, wherein the particular object detection algorithm is configured to filter at least a portion of interference caused by the determined aggregated rainfall level in sensor data captured by the at least one sensor; and
cause the particular object detection algorithm to be implemented for the at least one sensor.

Clause 8. A method comprising:
obtaining a plurality of sensor data captured by a plurality of sensors, wherein the plurality of sensors is associated with an autonomous vehicle, wherein each sensor from among the plurality of sensors is configured to capture sensor data, wherein the autonomous vehicle configured to travel along a road;
determining a plurality of rainfall levels based at least in part upon the plurality of sensor data, wherein each rainfall level from among the plurality of rainfall levels is captured by a different sensor from among the plurality of sensors, wherein determining the plurality of rainfall levels based at least in part upon the plurality of sensor data comprises:
   for at least one sensor from among the plurality of sensors:
   capturing a first sensor data when it is raining on the autonomous vehicle;
   capturing a second sensor data when it is not raining on the autonomous vehicle;
   comparing the first sensor data with the second sensor data;
   determining a difference between the first sensor data and the second sensor data;
   determining that the difference between the first sensor data and the second sensor data is due to rainfall; and
   determining a rainfall level associated with the at least one sensor, wherein the rainfall level corresponds to the difference between the first sensor data and the second sensor data;
determining an aggregated rainfall level in a particular time period by combining the plurality of rainfall levels determined during the particular time period.

Clause 9. The method of Clause 8, wherein:
the plurality of sensor data comprises at least one rain sensor;
the at least one rain sensor is configured to detect liquid levels on a housing of the at least one rain sensor; and
the method further comprises:
   for each rain sensor from among the at least one rain sensor:
      receiving a first signal from the rain sensor;
      determining, from the first signal, a liquid level on the housing of the rain sensor while it is raining on the housing of the rain sensor;
      comparing the liquid level with a reference liquid level on the housing of the rain sensor, wherein the reference liquid level is detected when there is no rainfall on the housing of the rain sensor;
      determining a difference between the reference liquid level and the liquid level; and
   determining a first rainfall level based at least in part upon the difference between the reference liquid level and the liquid level such that the first rainfall level is proportional to the difference between the reference liquid level and the liquid level.

Clause 10. The method of Clause 9, wherein determining the plurality of rainfall levels based at least in part upon the plurality of sensor data further comprises:
for each rain sensor from among the at least one rain sensor:
accessing a first table of calibration curve associated with the rain sensor in which each rainfall level detected by the rain sensor is mapped to a corresponding nominal rainfall level, wherein each rainfall level is mapped to the corresponding nominal rainfall level based at least in part upon a traveling speed of the autonomous vehicle;
identifying a first nominal rainfall level that is mapped to the first rainfall level in the first table of calibration curve; and
determining an average of a plurality of first nominal rainfall levels determined for the at least one rain sensor.

Clause 11. The method of Clause 8, wherein:
the plurality of sensor data comprises at least one light detection and ranging (LiDAR) sensor;
the at least one LiDAR sensor is configured to propagate incident laser beams and receive reflected laser beams bounced back from objects; and
the method further comprises:
   for each LiDAR sensor from among the at least one LiDAR sensor:
   receiving a second signal from the LiDAR sensor;
   determining, from the second signal, a laser beam power loss, wherein the laser beam power loss corresponds to a first difference between a first incident laser beam propagated by the LiDAR sensor and a first reflected laser beam received by the LiDAR sensor, wherein the laser beam power loss is determined when it is raining on the autonomous vehicle;
   comparing the laser beam power loss with a reference laser beam power loss, wherein the reference laser beam power loss is determined when it is not raining on the autonomous vehicle;
   determining an increase in the laser beam power loss compared to the reference laser beam power loss; and
determining a second rainfall level based at least in part upon the increase in the laser beam power loss such that the second rainfall level is proportional to the increase in the laser beam power loss;
wherein determining the plurality of rainfall levels based at least in part upon the plurality of sensor data further comprises:
   for each LiDAR sensor from among the at least one LiDAR sensor:
   accessing a second table of calibration curve associated with the LiDAR sensor in which each rainfall level detected by the LiDAR sensor is mapped to a corresponding nominal rainfall level, wherein each rainfall level is mapped to the corresponding nominal rainfall level based at least in part upon a traveling speed of the autonomous vehicle;
   identifying a second nominal rainfall level that is mapped with the second rainfall level; and
   determining an average of a plurality of second nominal rainfall levels determined for the at least one LiDAR sensor.

Clause 12. The method of Clause 8, wherein:
the plurality of sensors comprises at least one camera; and
the at least one camera is configured to capture at least one image of an environment around the autonomous vehicle.

Clause 13. The method of Clause 12, wherein determining the plurality of rainfall levels based at least in part upon the plurality of sensor data further comprises:
for each camera from among the at least one camera:
receiving the at least one image from the camera;
feeding the at least one image to an image processing neural network that is trained to identify a third rainfall level from the at least one image; and
determining the third rainfall level from the at least one image.

Clause 14. The method of Clause 8, wherein:
the plurality of sensors comprises at least one infrared camera; and
the at least one infrared camera is configured to capture at least one infrared image of an environment around the autonomous vehicle, wherein a color of an object in the at least one infrared image represents a particular temperature of the object.

Clause 15. The method of Clause 14, wherein determining the plurality of rainfall levels based at least in part upon the plurality of sensor data further comprises:
for each infrared camera from among the at least one infrared camera:
receiving a first infrared image from the infrared camera when it is not raining on the autonomous vehicle;
determining a reference temperature associated with a portion of the autonomous vehicle that is shown in the first infrared image, wherein the reference temperature is represented by a first color of the portion of the autonomous vehicle in the first infrared image;
receiving a second infrared image from the infrared camera when it is raining on the autonomous vehicle;
determining a temperature associated with the portion of the autonomous vehicle that is shown in the second infrared image wherein the temperature associated with the portion of the autonomous vehicle is represented by a second color of the portion of the autonomous vehicle in the second infrared image;
comparing the temperature and the reference temperature of the portion of the autonomous vehicle shown in the first infrared image and the second infrared image, respectively; and
determining a fourth rainfall level based at least in part upon a difference between the reference temperature and the temperature of the portion of the autonomous vehicle; and
determining an average of a plurality of fourth rainfall levels determined for the at least one infrared camera.

Clause 16. A computer program comprising executable instructions stored in a nontransitory computer-readable medium that when executed by at least one processor causes the at least one processor to:
obtain a plurality of sensor data captured by a plurality of sensors, wherein the plurality of sensors is associated with an autonomous vehicle, wherein each sensor from among the plurality of sensors is configured to capture sensor data, wherein the autonomous vehicle configured to travel along a road;
determine a plurality of rainfall levels based at least in part upon the plurality of sensor data, wherein each rainfall level from among the plurality of rainfall levels is captured by a different sensor from among the plurality of sensors, wherein to determine the plurality of rainfall levels, the at least one processor is further configured to at least:
   for at least one sensor from among the plurality of sensors:
   capture a first sensor data when it is raining on the autonomous vehicle;
   capture a second sensor data when it is not raining on the autonomous vehicle;
   compare the first sensor data with the second sensor data;
   determine a difference between the first sensor data and the second sensor data;
   determine that the difference between the first sensor data and the second sensor data is due to rainfall; and
   determine a rainfall level associated with the at least one sensor, wherein the rainfall level corresponds to the difference between the first sensor data and the second sensor data;
determine an aggregated rainfall level in a particular time period by combining the plurality of rainfall levels determined during the particular time period.

Clause 17. The computer program of Clause 16, wherein the instructions when executed by the at least one processor, further cause the at least one processor to at least:
receive feedback that indicates the plurality of sensor data indicates a sixth rainfall level;
associate the plurality of sensor data to the sixth rainfall level;
feed the plurality of sensor data associated with the sixth rainfall level to a rainfall level detection model, wherein the rainfall level detection model comprises a neural network configured to detect rainfalls from sensor data; and
train the rainfall level detection model to learn to associate the plurality of sensor data with the sixth rainfall level.

Clause 18. The computer program of Clause 16, wherein the instructions when executed by the at least one processor, further cause the at least one processor to at least determine a confidence score to the aggregated rainfall level, wherein the confidence score is determined based at least in part upon a standard deviation of a mean value of the plurality of rainfall levels such that the confidence score is inversely proportional to the standard deviation.

Clause 19. The computer program of Clause 16, wherein the instructions when executed by the at least one processor, further cause the at least one processor to at least communicate a message to one or more autonomous vehicles traveling on the road behind the autonomous vehicle indicating the aggregated rainfall level at a location of the autonomous vehicle.

Clause 20. The computer program of Clause 16, wherein:
one of the plurality of rainfall levels is determined from a weather report;
the weather report is associated with a location of the autonomous vehicle; and
the instructions when executed by the at least one processor, further cause the at least one processor to:
   identify a rainfall level indicated in the weather report;
   include the rainfall level in the plurality of rainfall levels;
each of the plurality of rainfall levels is assigned a corresponding weight value, wherein the corresponding weight value assigned to a rainfall level represents an accuracy level of the rainfall level, and wherein the instructions when executed by the at least one processor, further cause the at least one processor to:
   determine a location of the autonomous vehicle;
   determine an area associated with the weather report;
determine that the autonomous vehicle is located within a threshold distance from the area associated with the weather report; and
assign a higher weight value to a particular rainfall determined from the weather report compared to other weight values assigned to other rainfall levels determined from the plurality of sensors.

## Claims

1. A method comprising:
obtaining a plurality of sensor data captured by a plurality of sensors, wherein the plurality of sensors is associated with an autonomous vehicle, wherein each sensor from among the plurality of sensors is configured to capture sensor data, wherein the autonomous vehicle configured to travel along a road;
determining a plurality of rainfall levels based at least in part upon the plurality of sensor data, wherein each rainfall level from among the plurality of rainfall levels is captured by a different sensor from among the plurality of sensors, wherein determining the plurality of rainfall levels based at least in part upon the plurality of sensor data comprises:
for at least one sensor from among the plurality of sensors:
capturing a first sensor data when it is raining on the autonomous vehicle;
capturing a second sensor data when it is not raining on the autonomous vehicle;
comparing the first sensor data with the second sensor data;
determining a difference between the first sensor data and the second sensor data;
determining that the difference between the first sensor data and the second sensor data is due to rainfall; and
determining a rainfall level associated with the at least one sensor, wherein the rainfall level corresponds to the difference between the first sensor data and the second sensor data;
determining an aggregated rainfall level in a particular time period by combining the plurality of rainfall levels determined during the particular time period.

2. The method of claim 1, wherein:
the plurality of sensor data comprises at least one rain sensor;
the at least one rain sensor is configured to detect liquid levels on a housing of the at least one rain sensor; and
the method further comprises:
for each rain sensor from among the at least one rain sensor:
receiving a first signal from the rain sensor;
determining, from the first signal, a liquid level on the housing of the rain sensor while it is raining on the housing of the rain sensor;
comparing the liquid level with a reference liquid level on the housing of the rain sensor, wherein the reference liquid level is detected when there is no rainfall on the housing of the rain sensor;
determining a difference between the reference liquid level and the liquid level; and
determining a first rainfall level based at least in part upon the difference between the reference liquid level and the liquid level such that the first rainfall level is proportional to the difference between the reference liquid level and the liquid level.

3. The method of claim 2, wherein determining the plurality of rainfall levels based at least in part upon the plurality of sensor data further comprises:
for each rain sensor from among the at least one rain sensor:
accessing a first table of calibration curve associated with the rain sensor in which each rainfall level detected by the rain sensor is mapped to a corresponding nominal rainfall level, wherein each rainfall level is mapped to the corresponding nominal rainfall level based at least in part upon a traveling speed of the autonomous vehicle;
identifying a first nominal rainfall level that is mapped to the first rainfall level in the first table of calibration curve; and
determining an average of a plurality of first nominal rainfall levels determined for the at least one rain sensor.

4. The method of any preceding claim, wherein:
the plurality of sensor data comprises at least one light detection and ranging (LiDAR) sensor;
the at least one LiDAR sensor is configured to propagate incident laser beams and receive reflected laser beams bounced back from objects; and
the method further comprises:
for each LiDAR sensor from among the at least one LiDAR sensor:
receiving a second signal from the LiDAR sensor;
determining, from the second signal, a laser beam power loss, wherein the laser beam power loss corresponds to a first difference between a first incident laser beam propagated by the LiDAR sensor and a first reflected laser beam received by the LiDAR sensor, wherein the laser beam power loss is determined when it is raining on the autonomous vehicle;
comparing the laser beam power loss with a reference laser beam power loss, wherein the reference laser beam power loss is determined when it is not raining on the autonomous vehicle;
determining an increase in the laser beam power loss compared to the reference laser beam power loss; and
determining a second rainfall level based at least in part upon the increase in the laser beam power loss such that the second rainfall level is proportional to the increase in the laser beam power loss;
wherein determining the plurality of rainfall levels based at least in part upon the plurality of sensor data further comprises:
for each LiDAR sensor from among the at least one LiDAR sensor:
accessing a second table of calibration curve associated with the LiDAR sensor in which each rainfall level detected by the LiDAR sensor is mapped to a corresponding nominal rainfall level, wherein each rainfall level is mapped to the corresponding nominal rainfall level based at least in part upon a traveling speed of the autonomous vehicle;
identifying a second nominal rainfall level that is mapped with the second rainfall level; and
determining an average of a plurality of second nominal rainfall levels determined for the at least one LiDAR sensor.

5. The method of any preceding claim, wherein:
the plurality of sensors comprises at least one camera; and
the at least one camera is configured to capture at least one image of an environment around the autonomous vehicle, and optionally wherein:
determining the plurality of rainfall levels based at least in part upon the plurality of sensor data further comprises:
for each camera from among the at least one camera:
receiving the at least one image from the camera;
feeding the at least one image to an image processing neural network that is trained to identify a third rainfall level from the at least one image; and
determining the third rainfall level from the at least one image.

6. The method of any preceding claim, wherein:
the plurality of sensors comprises at least one infrared camera; and
the at least one infrared camera is configured to capture at least one infrared image of an environment around the autonomous vehicle, wherein a color of an object in the at least one infrared image represents a particular temperature of the object, and optionally wherein determining the plurality of rainfall levels based at least in part upon the plurality of sensor data further comprises:
for each infrared camera from among the at least one infrared camera:
receiving a first infrared image from the infrared camera when it is not raining on the autonomous vehicle;
determining a reference temperature associated with a portion of the autonomous vehicle that is shown in the first infrared image, wherein the reference temperature is represented by a first color of the portion of the autonomous vehicle in the first infrared image;
receiving a second infrared image from the infrared camera when it is raining on the autonomous vehicle;
determining a temperature associated with the portion of the autonomous vehicle that is shown in the second infrared image wherein the temperature associated with the portion of the autonomous vehicle is represented by a second color of the portion of the autonomous vehicle in the second infrared image;
comparing the temperature and the reference temperature of the portion of the autonomous vehicle shown in the first infrared image and the second infrared image, respectively; and
determining a fourth rainfall level based at least in part upon a difference between the reference temperature and the temperature of the portion of the autonomous vehicle; and
determining an average of a plurality of fourth rainfall levels determined for the at least one infrared camera.

7. The method of any preceding claim, further comprising:
updating driving instructions associated with the autonomous vehicle based at least in part upon the determined aggregated rainfall level,
wherein the updated driving instructions comprises one or more of increasing a following distance, increasing a planned stopping distance, turning on headlights, and turning on windshield wipers,
and optionally wherein increasing the following distance is proportional to the determined aggregated rainfall level and wherein increasing the planned stopping distance is proportional to the determined aggregated rainfall level.

8. The method of any preceding claim, further comprising:
scheduling a sensor cleaning operation based at least in part upon the determined aggregated rainfall level such that a housing of at least one sensor is scheduled to be cleaned more frequently for a higher determined aggregated rainfall level.

9. The method of any preceding claim, wherein combining the plurality of rainfall levels comprises determining a mean of a plurality of nominal rainfall levels, and
wherein each nominal rainfall level from among the plurality of nominal rainfall levels is mapped with a corresponding rainfall level from among the plurality of rainfall levels.

10. The method of any preceding claim, further comprising:
selecting, for the at least one sensor, a particular object detection algorithm associated with the at least one sensor that is pre-mapped with the determined aggregated rainfall level, wherein the particular object detection algorithm is configured to filter at least a portion of interference caused by the determined aggregated rainfall level in sensor data captured by the at least one sensor; and
causing the particular object detection algorithm to be implemented for the at least one sensor.

11. The method of any preceding claim, further comprising:
receiving feedback that indicates the plurality of sensor data indicates a sixth rainfall level;
associating the plurality of sensor data to the sixth rainfall level;
feeding the plurality of sensor data associated with the sixth rainfall level to a rainfall level detection model, wherein the rainfall level detection model comprises a neural network configured to detect rainfalls from sensor data; and
training the rainfall level detection model to learn to associate the plurality of sensor data with the sixth rainfall level.

12. The method of any preceding claim, further comprising determining a confidence score to the aggregated rainfall level, wherein the confidence score is determined based at least in part upon a standard deviation of a mean value of the plurality of rainfall levels such that the confidence score is inversely proportional to the standard deviation.

13. The method of any preceding claim, further comprising communicating a message to one or more autonomous vehicles traveling on the road behind the autonomous vehicle indicating the aggregated rainfall level at a location of the autonomous vehicle.

14. The method of any preceding claim, further comprising:
determining one of the plurality of rainfall levels from a weather report, the weather report being associated with a location of the autonomous vehicle;
identifying a rainfall level indicated in the weather report;
including the rainfall level in the plurality of rainfall levels, each of the plurality of rainfall levels being assigned a corresponding weight value, wherein the corresponding weight value assigned to a rainfall level represents an accuracy level of the rainfall level;
determining a location of the autonomous vehicle;
determining an area associated with the weather report;
determining that the autonomous vehicle is located within a threshold distance from the area associated with the weather report; and
assigning a higher weight value to a particular rainfall determined from the weather report compared to other weight values assigned to other rainfall levels determined from the plurality of sensors.

15. A system comprising:
an autonomous vehicle configured to travel along a road, wherein the autonomous vehicle is associated with a plurality of sensors, wherein each sensor from among the plurality of sensors is configured to capture sensor data; and
a control device associated with the autonomous vehicle and comprising at least one processor configured to perform the method of any preceding claim.

16. A computer program comprising executable instructions stored in a computer-readable medium that, when executed by the at least one processor, cause the at least one processor to perform the method of any of claims 1 to 14.
